# EUROPEAN PATENT APPLICATION

(11) **EP 4 730 013 A1**
(43) Date of publication of application: **22.04.2026**
(21) Application number: 24832268.7
(22) Date of filing: 24.05.2024
(51) Int. Cl.: G02B 27/01

(54) **DRIVING STRUCTURE AND WEARABLE ELECTRONIC DEVICE INCLUDING SAME**

(30) Priority: 26.06.2023 KR 20230081853; 31.08.2023 KR 20230115229
(71) Applicant: Samsung Electronics Co., Ltd., Suwon-si, Gyeonggi-do 16677 (KR)
(72) Inventor: KWAK, Myunghoon, Suwon-si Gyeonggi-do 16677 (KR); KIM, Gyeongbeom, Suwon-si Gyeonggi-do 16677 (KR); PARK, Jonggyu, Suwon-si Gyeonggi-do 16677 (KR); LEE, Kyungsup, Suwon-si Gyeonggi-do 16677 (KR); CHOI, Nakhyun, Suwon-si Gyeonggi-do 16677 (KR)
(74) Representative: Nederlandsch Octrooibureau
(86) International application number: PCT/KR2024/007059
(87) International publication number: WO 2025/005485

(57) **Abstract**

According to an embodiment disclosed herein, a wearable electronic device comprises: a housing; a first lens assembly; a second lens assembly; a display module; a driving member; a first rack coupled to the first lens assembly; and a second rack coupled to the second lens assembly. The first rack includes: a first surface; a second surface facing the opposite direction as the first surface; and first gear teeth protruding from the second surface. The second rack includes: a third surface; a fourth surface facing the opposite direction as the third surface; and second gear teeth protruding from the fourth surface. The second surface of the first rack may face substantially the same direction as the fourth surface of the second rack. Various other embodiments may also be possible.

## Description

### [Technical Field]

Various embodiments disclosed herein relate to a wearable electronic device. For example, various embodiments disclosed herein relate to a driving structure and a wearable electronic device including the same.

### [Background Art]

Portable electronic devices, such as electronic notebooks, portable multimedia players, mobile communication terminals, or tablet PCs, generally incorporate a display member and a battery, and due to the shapes of the display member or the battery, have typically had a bar type, folder type, or sliding type exterior. In recent years, with performance improvement and miniaturization of display members and batteries, wearable electronic devices, which are wearable on a portion of the body, such as the wrist or the head, have become commercialized. Since the wearable electronic devices are directly worn on the body, the wearable electronic devices can be improved in portability and/or user accessibility.

Among the wearable electronic devices, an electronic device that is wearable on a user's face such as a head-mounted device (HMD) is disclosed. A head-mounted device may be usefully utilized for implementing virtual reality (VR) or augmented reality (AR). For example, a wearable electronic device may implement virtual reality by providing a three-dimensional image of a virtual space in a game, which has been enjoyed through a television or a computer monitor, and blocking the image of the real space in which the user is present. Other types of wearable electronic devices may implement augmented reality that provides various visual information to a user by implementing virtual images while providing an environment in which an actual image of a space in which the user is present is visually recognizable.

The above-described information may be provided as related art for the purpose of helping to understand the disclosure. No claim or determination is made as to whether any of the foregoing may be applied as prior art with respect to the disclosure.

### [Detailed Description of the Invention]

### [Technical Solution]

According to an embodiment of the disclosure, a wearable electronic device may include a housing, a first lens assembly disposed within the housing, a second lens assembly disposed within the housing, a display module configured to output an image to a user through the first lens assembly and the second lens assembly, a driving member disposed within the housing, a first rack operatively connected to the driving member and coupled to the first lens assembly, and a second rack operatively connected to the driving member and coupled to the second lens assembly. The first rack may include a first surface coupled to at least a portion of the first lens assembly, a second surface facing a direction opposite to the first surface, and first gear teeth protruding from the second surface. The second rack may include a third surface coupled to at least a portion of the second lens assembly, a fourth surface facing a direction opposite to the third surface, and second gear teeth protruding from the fourth surface. The second surface of the first rack may face substantially the same direction as the fourth surface of the second rack, and the first rack and the second rack may be configured to slide in opposite directions relative to each other based on a driving force provided from the driving member.

According to an embodiment of the disclosure, a driving structure may include a driving member, a first rack operatively connected to the driving member and coupled to a first lens assembly, and a second rack operatively connected to the driving member and coupled to a second lens assembly. The first rack may include a first surface coupled to at least a portion of the first lens assembly, a second surface facing a direction opposite to the first surface, and first gear teeth protruding from the second surface. The second rack may include a third surface coupled to at least a portion of the second lens assembly, a fourth surface facing a direction opposite to the third surface, and second gear teeth protruding from the fourth surface. The second surface of the first rack may face substantially the same direction as the fourth surface of the second rack, and the first rack and the second rack may be configured to slide in opposite directions relative to each other based on a driving force provided from the driving member.

According to an embodiment of the disclosure, a wearable electronic device may include a housing, a first lens assembly disposed within the housing, a second lens assembly disposed within the housing, a first display module disposed in the first lens assembly, a second display module disposed on the second lens assembly, and a driving structure disposed within the housing and configured to provide a driving force to cause the first lens assembly and the second lens assembly to slide in a direction in which the first lens assembly and the second lens assembly become closer to or farther from each other. The driving structure may include a bracket, a motor at least partially accommodated in the bracket, a first rack operatively connected to the motor, coupled to at least a portion of the first lens assembly, and configured to slide on the bracket, and a second rack operatively connected to the motor, coupled to at least a portion of the second lens assembly, and configured to slide on the bracket.

According to an embodiment of the disclosure, the driving structure may be configured to provide a driving force to cause the first lens assembly and the second lens assembly to slide in a direction in which the first lens assembly and the second lens assembly become closer to or farther from each other. The driving structure may include a bracket, a motor at least partially accommodated in the bracket, a first rack operatively connected to the motor, coupled to at least a portion of the first lens assembly, and configured to slide on the bracket, and a second rack operatively connected to the motor, coupled to at least a portion of the second lens assembly, and configured to slide on the bracket.

### [Brief Description of Drawings]

FIG. 1 is a block diagram of an electronic device according to various embodiments in a network environment.
FIG. 2 is a front perspective view of a wearable electronic device according to an embodiment of the disclosure.
FIG. 3 is a rear perspective view of the wearable electronic device according to an embodiment of the disclosure.
FIG. 4 is an exploded perspective view of a wearable electronic device according to an embodiment of the disclosure.
FIG. 5 is an exploded perspective view illustrating a rear case, a lens bracket, and a driving structure according to an embodiment of the disclosure.
FIG. 6 is a plan view illustrating the rear case and the driving structure according to an embodiment of the disclosure.
FIG. 7 is a plan view illustrating a state in which a pair of lens brackets are arranged relatively close to each other according to an embodiment of the disclosure.
FIG. 8 is a plan view illustrating a state in which a pair of lens brackets are arranged relatively far from each other according to an embodiment of the disclosure.
FIG. 9 is a plan view illustrating the driving structure according to an embodiment of the disclosure.
FIG. 10 is a side view illustrating the driving structure according to an embodiment of the disclosure.
FIG. 11 is a side view illustrating the driving structure viewed in a direction different from that of FIG. 10 according to an embodiment of the disclosure.
FIG. 12 is a perspective view illustrating the driving structure of FIG. 9 according to an embodiment of the disclosure, viewed along line A-A.
FIG. 13 is a plan view illustrating a driving structure according to an embodiment of the disclosure.
FIG. 14 is a side view illustrating the driving structure according to an embodiment of the disclosure.
FIG. 15 is a side view illustrating the driving structure according to an embodiment of the disclosure as viewed from a direction different from that of FIG. 14.
FIG. 16 is a perspective view illustrating the driving structure according to an embodiment of the disclosure, obtained by cutting along line B-B of FIG. 13.

### [Mode for Carrying out the Invention]

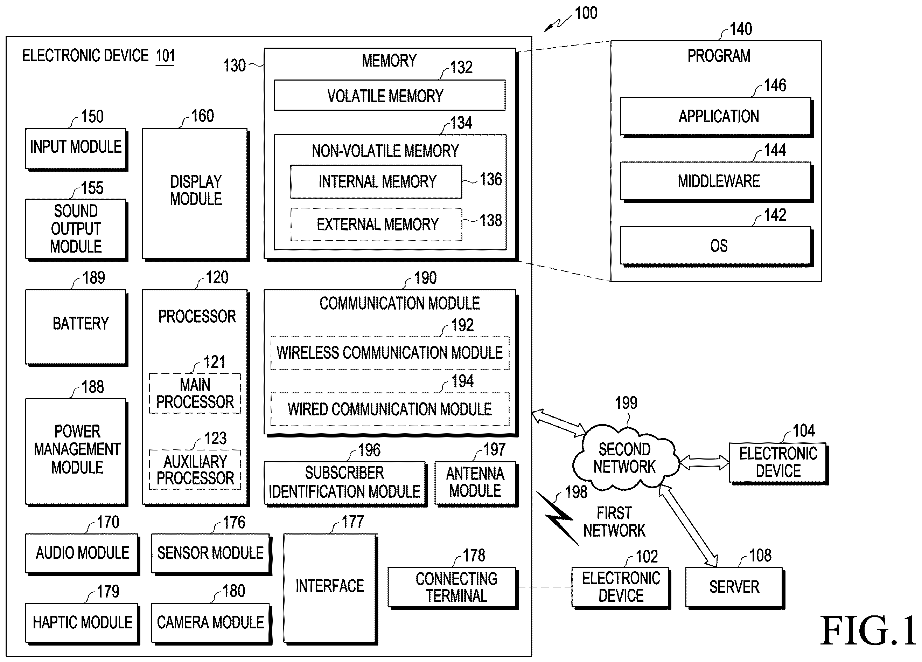

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

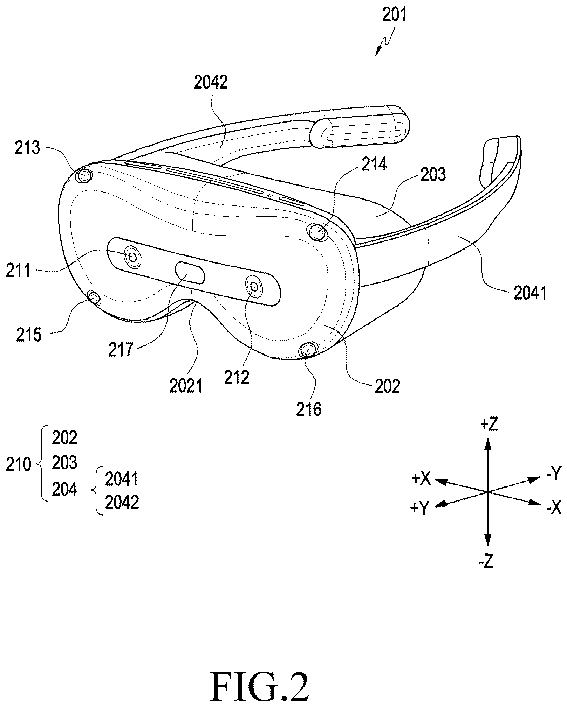

FIG. 2 is a front perspective view of a wearable electronic device according to an embodiment of the disclosure.

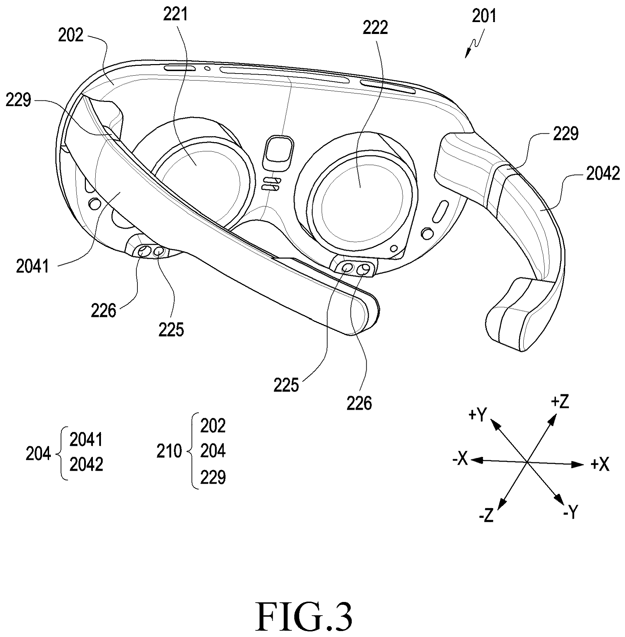

FIG. 3 is a rear perspective view of the wearable electronic device according to an embodiment of the disclosure.

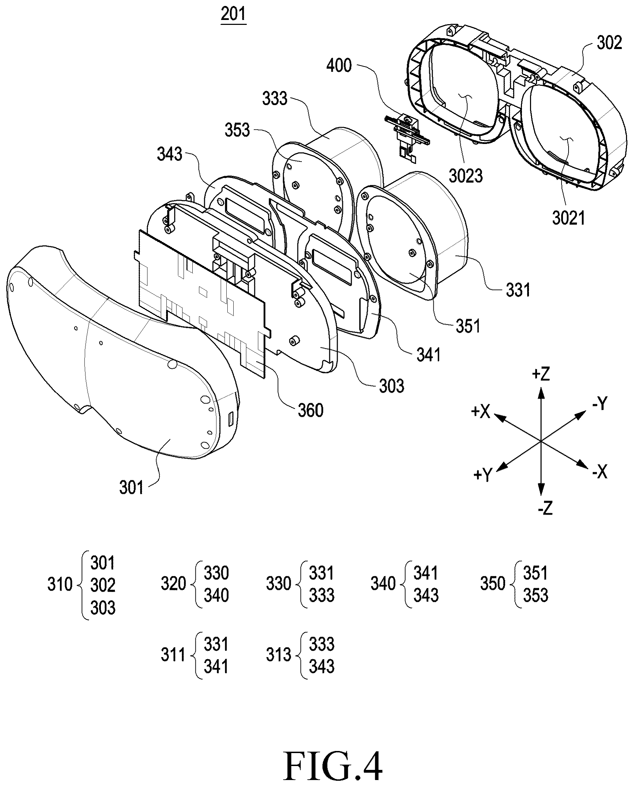

The embodiment of FIGS. 2 and 3 may be combinable with the embodiment of FIG. 1 or the embodiments of FIGS. 4 to 16.

The configuration of the wearable electronic device 201 of FIG. 2 may be partially or entirely the same as the configuration of the electronic device 201 of FIG. 1.

Referring to FIGS. 2 to 3, the wearable electronic device 201 (e.g., the electronic device 101 of FIG. 1) may include a housing 210.

According to an embodiment, the wearable electronic device 201 may be a body-worn device. For example, the wearable electronic device 201 may be a head-mounted device (HMD) capable of directly providing an image in front of a user's eyes, smart glasses, or a video see-through (VST) device. In the illustrated embodiments, the wearable electronic device 201 is illustrated as having the external appearance of goggles, but the wearable electronic device 201 of the disclosure is not limited thereto and may have various types of appearances.

According to an embodiment, the wearable electronic device 201 may include a housing 210 forming an external appearance of the wearable electronic device 201. According to an embodiment, the housing 210 may form the external appearance of the wearable electronic device 201 and may provide a space in which components of the wearable electronic device 201 may be disposed.

According to an embodiment, the housing 210 may include a first housing 202, a second housing 203, or at least one wearing member 204. In FIG. 3, for convenience of description, the second housing 203 is illustrated in a state separated from (or removed from) the wearable electronic device 201.

According to an embodiment, the first housing 202 may provide a space in which components of the wearable electronic device 201 can be arranged. For example, the first housing 202 may be referred to as a cover housing or a main housing.

According to an embodiment, the first housing 202 may include a nose support portion 2021, at least a portion of which is formed concavely. The nose support portion 2021 may be positioned on a user's nose or supported by a user's nose.

According to an embodiment, the wearable electronic device 201 may include a display module (e.g., the display module 350 of FIG. 4) disposed inside the first housing 202 and configured to output a visual image. The display module may output the visual image to a user's left eye and right eye through lenses 221 and 222 disposed on a rear surface of the first housing 202 (e.g., a surface facing the -Y direction in FIGS. 2 to 3). For example, the lenses 221 and 222 may include a first lens 221 configured to correspond to the user's left eye and a second lens 222 configured to correspond to the user's right eye.

According to an embodiment, the wearable electronic device 201 may include VST camera modules 211 and 212, a plurality of camera modules 213, 214, 215, and 216, and/or an infrared (IR) camera module 217.

According to an embodiment, the camera modules 211 to 217 may be disposed on the first housing 202 or may be exposed to the outside of the wearable electronic device 201 through openings formed in the first housing 202.

According to an embodiment, the VST camera modules 211 and 212 may be camera modules for video see-through (VST). For example, the wearable electronic device 201 may display, on the display module, at least a portion of an image associated with a surrounding environment that is captured through the VST camera modules 211 and 212 (or an object processed based on at least a portion thereof and/or an object corresponding to at least a portion thereof), as at least a portion of VST content. Accordingly, a user may identify at least a portion of an image associated with a surrounding environment that is captured through the VST camera modules 211 and 212. For example, the VST content may be generated by mixing at least a portion of content for a VR environment and at least a portion of an image captured through the VST camera modules 211 and 212. For example, the VST content may be generated by mixing content for a VR environment and at least a partial processing result (or a corresponding object) of an image captured through the VST camera modules 211 and 212. For example, the VST content may be generated based on at least a portion of an image captured through the VST camera modules 211 and 212. For example, the VST content may be generated based on the processing result (or corresponding object) of at least a portion of the image captured through the VST camera modules 211 and 212.

According to an embodiment, the wearable electronic device 201 may acquire a visual image of an object or environment in a direction viewed by a user or a direction toward which the wearable electronic device 201 is oriented (e.g., the +Y direction in FIGS. 2 to 3) by using the plurality of camera modules 213, 214, 214, and 215.

According to an embodiment, the camera modules 213 and 214 may be disposed on a relatively upper portion of the first housing 202. In addition, the camera modules 213 and 214 may be exposed through openings formed in the first housing 202. The camera modules 213 and 214 may capture an image corresponding to a field of view (FOV) based on at least one point of the first housing 202, for example, an FOV corresponding to a relatively upper side when a user wears the wearable electronic device 201. An image acquired by the camera modules 213 and 214 may be used for, for example, simultaneous localization and mapping (SLAM) and/or six degrees of freedom (6DoF), and/or for recognition and/or tracking of a subject corresponding to the FOV. The image acquired by the camera modules 213 and 214 may also be used for head tracking.

According to an embodiment, the camera modules 215 and 216 may be disposed on a relatively lower portion of the first housing 202. In addition, the camera modules 215 and 216 may be exposed through openings formed in the first housing 202. Here, the upper portion corresponding to the camera modules 213 and 214 and the lower portion corresponding to the camera modules 215 and 216 are defined when a user wears the wearable electronic device 201, and a portion relatively closer to the ground is referred to as the lower portion, while a portion relatively farther from the ground is referred to as the upper portion. A person ordinarily skilled in the art will understand that this is merely for convenience of description. The camera modules 215 and 216 may capture an image corresponding to a field of view (FOV) based on at least one point of the first housing 202, for example, an FOV corresponding to a relatively lower side when a user wears the wearable electronic device 201. An image acquired by the camera modules 215 and 216 may be used for recognition and/or tracking of a subject corresponding to the FOV. For example, an image acquired by the camera modules 215 and 216 may be used for recognition and/or tracking of a subject disposed relatively lower than a portion corresponding to a user's head when the user wears the electronic device 201, for example, a user's hand, although such use is not limited thereto.

According to an embodiment, the wearable electronic device 201 may perform recognition and/or tracking of a subject using at least one image captured by the camera modules 213, 214, 215, and 216. The wearable electronic device 201 may perform an operation identified based on a recognition and/or tracking result, and may provide, for example, a visual object at a position corresponding to a subject, but there is no restriction on the operation. For example, when a virtual keyboard is provided by the wearable electronic device 201, keys designated on the virtual keyboard may be recognized based on a tracking result of a user's hand. An operation corresponding to a recognition and/or tracking result may be performed, for example, solely by the wearable electronic device 201, but this is merely exemplary. The operation may also be performed based on cooperation between the wearable electronic device 201 and an external electronic device (e.g., the electronic device 102, the electronic device 104, and/or the server 108 of FIG. 1).

According to an embodiment, the camera modules 213, 214, 215, and 216 may be used for 3DoF, 6DoF head tracking, hand detection, hand tracking, and/or spatial recognition, and may be global shutter (GS) cameras. However, there is no limitation, and the camera modules may also be implemented as rolling shutter (RS) cameras.

According to an embodiment, the infrared (IR) camera module 217 may include a time of flight (TOF) camera or a structured light camera. For example, the IR camera module 217 may operate as at least a portion of a sensor module (or LiDAR sensor) for detecting a distance to a subject. According to an embodiment, the wearable electronic device 201 may further include a sensor module (e.g., a LiDAR sensor). For example, the sensor module may include at least one of a vertical cavity surface emitting laser (VCSEL), an infrared sensor, and/or a photodiode. According to an embodiment, the IR camera module 217 may be used for detecting a distance to an object (subject), such as in a time of flight (TOF) method.

According to an embodiment, the wearable electronic device 201 may include face tracking camera modules 225 and 226. The face tracking camera modules 225 and 226 may be used to detect and track a user's facial expressions. For example, the face tracking camera modules 225 and 226 may be exposed through openings formed in the first housing 202 (and/or the second housing 203). For example, the face tracking camera modules 225 and 226 may include a transmission face tracking camera module 225 or a reception face tracking camera module 226.

According to an embodiment, the wearable electronic device 201 may include a microphone module. The microphone module may convert sound into an electrical signal. The microphone module may be used to acquire voice information. According to an embodiment, the microphone module may be exposed through an opening formed in the first housing 202 (and/or the second housing 203).

According to an embodiment, the second housing 203 may be a portion that comes into contact with the user's face when the user wears the wearable electronic device 201. In addition, the second housing 203 may be formed such that at least a portion thereof has curvature to correspond to a user's forehead or cheekbones.

According to an embodiment, when the user wears the wearable electronic device 201, the second housing 203 may block external light from reaching the user's eyes by being in contact with the user's face. The second housing 203 may be referred to as a face cover or a cover housing. For example, the second housing 203 may be detachably coupled to a rear surface of the first housing 202.

According to an embodiment, at least one wearing member 204 may extend from an end portion of the first housing 202 and may be supported or located on the user's body (e.g., an ear). According to an embodiment, the at least one wearing member 204 may include a first wearing member 2041 supported on the user's left ear and a second wearing member 2042 supported on the user's right ear.

According to an embodiment, the housing 210 may further include at least one hinge structure 229. According to an embodiment, the at least one wearing member 204 may be rotatably coupled to the first housing 202 via the at least one hinge structure 229. The at least one hinge structure 229 may be disposed between the first housing 202 and the at least one wearing member 204. According to an embodiment, when the user is not wearing the wearable electronic device 201, the user may fold the wearing member 204 such that at least a portion thereof overlaps with the first housing 202, and may carry or store the wearable electronic device 201.

According to an embodiment, the plurality of camera modules 213, 214, 215, and 216 may each be disposed adjacent to an edge region or a corner region of the first housing 202. For example, the plurality of camera modules 213, 214, 215, and 216 may be disposed at corners of the first housing 202 in order to secure a wide field of view (FOV). According to an embodiment, the plurality of camera modules 213, 214, 215, and 216 may be exposed to the outside of the wearable electronic device 201 through openings formed at corners or edges of the first housing 202.

The descriptions of the illustrated camera modules 212, 213, 214, 215, 216, 217, 225, and 226 are merely exemplary, and the camera modules of the wearable electronic device 201 are not limited to the illustrated number and/or positions, and may have various numbers and/or positions.

FIG. 4 is an exploded perspective view of a wearable electronic device according to an embodiment of the disclosure.

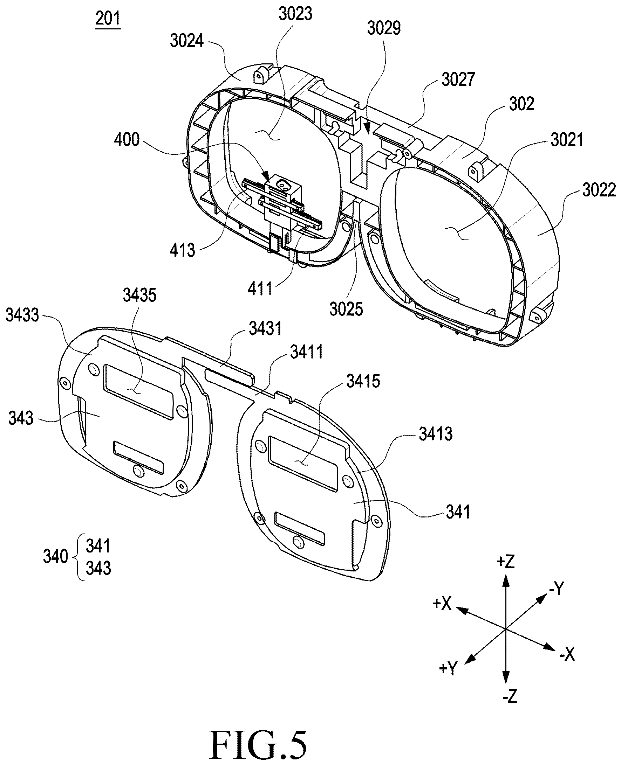

The embodiment of FIG. 4 may be combined with the embodiments of FIGS. 1 to 3 or the embodiments of FIGS. 5 to 16.

Referring to FIG. 4, the wearable electronic device 201 (e.g., the wearable electronic device 201 of FIGS. 2 to 3) may include a first housing 310, a lens assembly 320, a pair of lens barrels 330, a lens bracket 340, a display module 350, a circuit board 360, or a driving structure 400.

The configuration of the first housing 310 of FIG. 4 may be partially or entirely the same as the configuration of the first housing 202 of FIGS. 2 to 3.

According to an embodiment, the first housing 310 may include a front case 301, a rear case 302, or a display support member 303.

According to an embodiment, the appearance of the first housing 310 may be formed by coupling the front case 301 and the rear case 302 to each other. In addition, the internal space of the first housing 310 may be a space formed between the front case 301 and the rear case 302 when the front case 301 and the rear case 302 are coupled to each other. According to an embodiment, various electrical components may be disposed in the internal space of the first housing 310.

According to an embodiment, the front case 301 may be a housing that is disposed at a user's face or in a direction toward which the wearable electronic device 201 is oriented (e.g., the +Y direction of FIG. 4) when the user wears the wearable electronic device 201.

According to an embodiment, a plurality of openings may be formed in the front case 301. A plurality of camera modules (e.g., the plurality of camera modules 211, 212, 213, 214, 215, 216, and 217 of FIG. 2) may be disposed in the plurality of openings of the front case 301.

According to an embodiment, the rear case 302 may have a pair of through-holes 3021 and 3023 capable of receiving the pair of lens barrels 330. The pair of through-holes 3021 and 3023 may include a first through-hole 3021 configured to receive at least a portion of the first lens barrel 331, and a second through-hole 3023 configured to receive at least a portion of the second lens barrel 333.

According to an embodiment, the rear case 302 may be a housing that is disposed in a direction facing the user's face (e.g., the -Y direction of FIG. 4) when the user wears the wearable electronic device 201.

According to an embodiment, a plurality of openings may be formed in the rear case 302. A plurality of camera modules (e.g., the camera modules 225 and 226 of FIG. 3) may be disposed in the plurality of openings of the rear case 302.

According to an embodiment, the display support member 303 may be disposed between the front case 301 and the rear case 302. The display support member 303 may also be referred to as a display bracket. The display support member 303 may support at least a portion of the display module 350 and/or at least a portion of the lens assembly 320. At least a portion of the lens bracket 340 may be seated on the display support member 303.

According to an embodiment, the circuit board 360 (e.g., a PCB) may be disposed between the front case 301 and the display support member 303. The circuit board 360 may include components for driving the wearable electronic device 201. For example, the circuit board 360 may include at least one integrated circuit chip, and at least one of a processor (e.g., the processor 120 of FIG. 1), memory (e.g., the memory 130 of FIG. 1), a power management module (e.g., the power management module 188 of FIG. 1), or a communication module (e.g., the communication module 190 of FIG. 1) may be provided in the integrated circuit chip. According to an embodiment, the circuit board 360 may be disposed inside the first housing 310. For example, the circuit board 360 may be disposed between the front case 301 and the display support member 303.

According to an embodiment, the circuit board 360 may be connected to a flexible printed circuit board (FPCB) and may deliver electrical signals to electronic components of the electronic device (e.g., a camera module, a microphone module, a speaker module, or the display module 350) through the flexible printed circuit board. According to an embodiment, the circuit board 360 may include a circuit board including an interposer.

According to an embodiment, the lens assembly 320 may include the pair of lens barrels 330, lenses (e.g., the lenses 221 and 222 of FIG. 3), or the lens bracket 340.

According to an embodiment, the pair of lens barrels 330 may be fixed to the lens bracket 340. According to an embodiment, the pair of lens barrels 330 may include a first lens barrel 331 corresponding to a user's left eye and a second lens barrel 333 corresponding to a user's right eye. The first lens barrel 331 may include a first lens (e.g., the first lens 221 of FIG. 3), and the second lens barrel 333 may include a second lens (e.g., the second lens 222 of FIG. 3). Accordingly, the first lens (e.g., the first lens 221 of FIG. 3) and the second lens (e.g., the second lens 222 of FIG. 3) may be disposed to face the user's eyes.

According to an embodiment, the first lens barrel 331 may be coupled to the first lens bracket 341. For example, the first lens barrel 331 may be fixed to the first lens bracket 341. The first lens barrel 331 may slide together with the first lens bracket 341 based on sliding movement of the first lens bracket 341. The first lens barrel 331 may be coupled to one surface of the first lens bracket 341 (e.g., a surface facing the -Y direction of FIG. 4). The first lens barrel 331 may be disposed in the first through-hole 3021.

According to an embodiment, the second lens barrel 333 may be coupled to the second lens bracket 343. For example, the second lens barrel 333 may be fixed to the second lens bracket 343. The second lens barrel 333 may slide together with the second lens bracket 343 based on sliding movement of the second lens bracket 343. The second lens barrel 333 may be coupled to one surface of the second lens bracket 343 (e.g., a surface facing the -Y direction of FIG. 4). The second lens barrel 333 may be disposed in the second through-hole 3023.

According to an embodiment, the lens bracket 340 may be coupled to one surface of the display support member 303 (e.g., a surface facing the -Y direction of FIG. 4). The lens bracket 340 may include the first lens bracket 341 or the second lens bracket 343.

According to an embodiment, the first lens bracket 341 may be seated on at least a portion of the display support member 303. The display support member 303 may include a recess capable of receiving at least a portion of the first lens bracket 341. The first lens bracket 341 may slide on the display support member 303 based on a driving force provided from the driving structure 400.

According to an embodiment, the first lens bracket 341 may be coupled to the first lens barrel 331. The first lens bracket 341 may be coupled to the first lens barrel 331 through a fastening member (e.g., a bolt or a pin). The first lens bracket 341 may be coupled to the first lens barrel 331 through a magnetic member (e.g., a magnet).

According to an embodiment, the second lens bracket 343 may be seated on at least a portion of the display support member 303. The display support member 303 may include a recess capable of receiving at least a portion of the second lens bracket 343. The second lens bracket 343 may slide on the display support member 303 based on a driving force provided from the driving structure 400.

According to an embodiment, the second lens bracket 343 may be coupled to the second lens barrel 333. The second lens bracket 343 may be coupled to the second lens barrel 333 through a fastening member (e.g., a bolt or a pin). The second lens bracket 343 may be coupled to the second lens barrel 333 through a magnetic member (e.g., a magnet).

According to an embodiment, the display module 350 (e.g., the display module 160 of FIG. 1) may provide a visual image to the outside (e.g., a user's eye) of the wearable electronic device 201 through the lens assembly 320 (e.g., a pair of lens barrels 330). For example, the display module 350 may include, for example, a liquid crystal display (LCD), a digital mirror device (DMD), a liquid crystal on silicon (LCoS), a light-emitting diode on silicon (LEDoS), an organic light-emitting diode (OLED), or a micro light-emitting diode (micro-LED). Although not illustrated, when the display module 350 is constituted by one of a liquid crystal display device, a digital mirror display device, or a silicon liquid crystal display device, the wearable electronic device 201 may include a light source that emits light toward a screen output region of the display module 350. In an embodiment, when the display module 350 is capable of generating light by itself, for example, when it is constituted by one of an organic light-emitting diode or a micro light-emitting diode, the wearable electronic device 201 may provide a virtual image of favorable quality to a user even without including a separate light source. In an embodiment, when the display module 350 is implemented as an organic light-emitting diode or a micro light-emitting diode, a light source becomes unnecessary, so the wearable electronic device 201 may be reduced in weight.

According to an embodiment, the display module 350 may be disposed in the pair of lens barrels 330. The display module 350 may include a first display module 351 or a second display module 353.

According to an embodiment, the first display module 351 may be disposed on the first lens barrel 331 so as to correspond to a user's left eye. The second display module 353 may be disposed on the second lens barrel 333 so as to correspond to a user's right eye.

According to an embodiment, the first display module 351 may output a visual image to the user's left eye through the first lens barrel 331 and/or the first lens (e.g., the first lens 221 of FIG. 3). The second display module 353 may output a visual image to the user's right eye through the second lens barrel 333 and/or the second lens (e.g., the second lens 222 of FIG. 3).

According to an embodiment, the wearable electronic device 201 may include a driving structure 400 configured to provide a driving force for sliding movement with respect to the lens assembly 320.

According to an embodiment, the driving structure 400 may be fixed to the rear case 302. According to an embodiment, the driving structure 400 may also be fixed to the display support member 303. According to an embodiment, the driving structure 400 may be positioned between the rear case 302 and the display support member 303.

According to an embodiment, the driving structure 400 may provide a driving force for the first lens barrel 331 and the second lens barrel 333 to slide in opposite directions from each other. For example, when the first lens barrel 331 slides in a first direction (e.g., the -X direction of FIG. 4) in which the first lens barrel 331 becomes relatively farther from the second lens barrel 333, the second lens barrel 333 may slide in a second direction (e.g., the +X direction of FIG. 4) in which the second lens barrel 333 becomes relatively farther from the first lens barrel 331. For example, when the first lens barrel 331 slides in the second direction (e.g., the +X direction of FIG. 4) in which the first lens barrel 331 becomes relatively closer to the second lens barrel 333, the second lens barrel 333 may slide in the first direction (e.g., the -X direction of FIG. 4) in which the second lens barrel 333 becomes relatively closer to the first lens barrel 331.

According to an embodiment, at least a portion of the driving structure 400 (e.g., the first rack 411 of FIG. 5) may be fixed to the first lens bracket 341, and another portion of the driving structure 400 (e.g., the second rack 413 of FIG. 5) may be fixed to the second lens bracket 343.

According to an embodiment, the first lens barrel 331, the first lens (e.g., the first lens 221 of FIG. 3) disposed in the first lens barrel 331, and the first lens bracket 341 may be defined and/or referred to as a first lens assembly 311. For example, the first lens assembly 311 may include the first lens barrel 331, the first lens, and the first lens bracket 341. The first lens assembly 311 may slide in a direction in which the first lens assembly 311 becomes relatively closer to or relatively farther from the second lens assembly 313, based on a driving force provided from the driving structure 400.

According to an embodiment, the second lens barrel 333, the second lens (e.g., the second lens 222 of FIG. 3) disposed in the second lens barrel 333, and the second lens bracket 343 may be defined and/or referred to as a second lens assembly 313. For example, the second lens assembly 313 may include the second lens barrel 333, the second lens, and the second lens bracket 343. The second lens assembly 313 may slide in a direction in which the second lens assembly 313 becomes relatively closer to or relatively farther from the first lens assembly 311, based on a driving force provided from the driving structure 400.

According to an embodiment, the wearable electronic device 201 may further include a battery (e.g., the battery 189 of FIG. 1) configured to provide power (or electrical power) to components of the wearable electronic device 201. The battery may include a power management module (e.g., the power management module 188 of FIG. 1).

According to an embodiment, when the driving structure 400 provides a driving force for sliding movement with respect to the first lens bracket 341, the first lens bracket 341 and the first lens barrel 331 fixed to the first lens bracket 341 may slide. According to an embodiment, as the first lens barrel 331 slides, the first display module 351 fixed to the first lens barrel 331 may slide together with the first lens barrel 331.

According to an embodiment, when the driving structure 400 provides a driving force for sliding movement with respect to the second lens bracket 343, the second lens bracket 343 and the second lens barrel 333 fixed to the second lens bracket 343 may slide. According to an embodiment, as the second lens barrel 333 slides, the second display module 353 fixed to the second lens barrel 333 may slide together with the second lens barrel 333.

FIG. 5 is an exploded perspective view illustrating a rear case, a lens bracket, and a driving structure according to an embodiment of the disclosure.

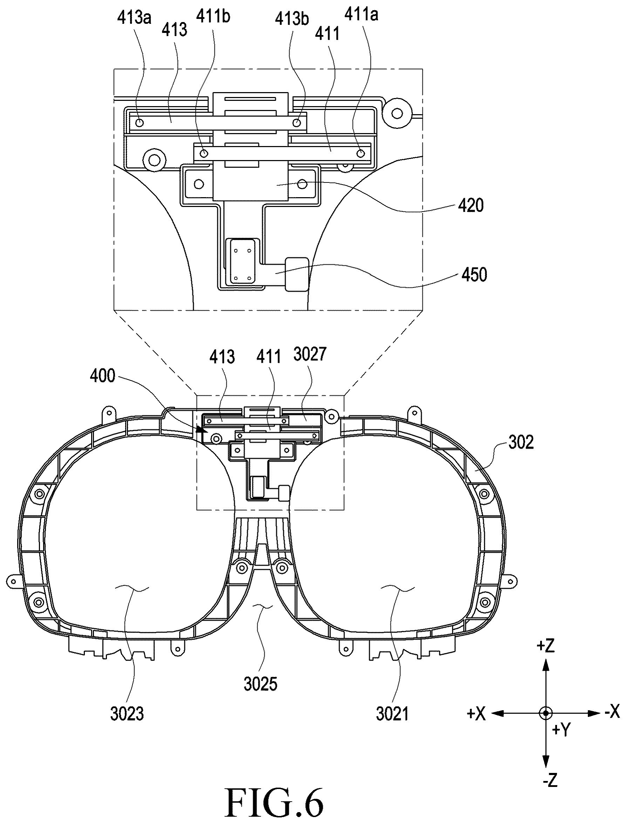

FIG. 6 is a plan view illustrating the rear case and the driving structure according to an embodiment of the disclosure.

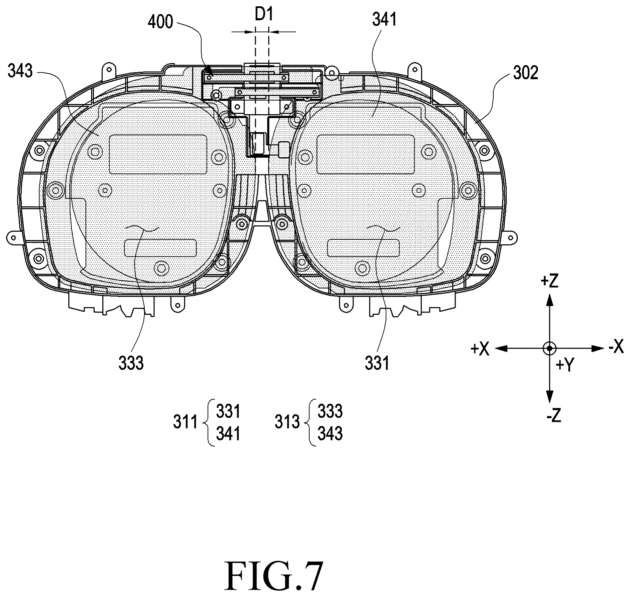

FIG. 7 is a plan view illustrating a state in which a pair of lens brackets are arranged relatively close to each other according to an embodiment of the disclosure.

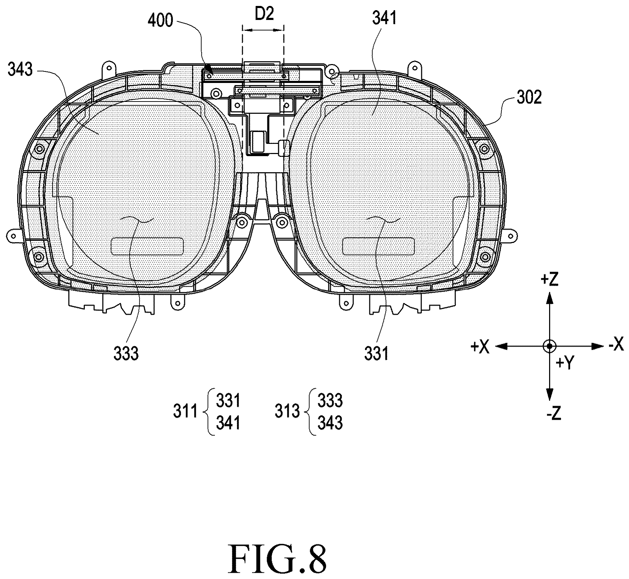

FIG. 8 is a plan view illustrating a state in which a pair of lens brackets are arranged relatively far from each other according to an embodiment of the disclosure.

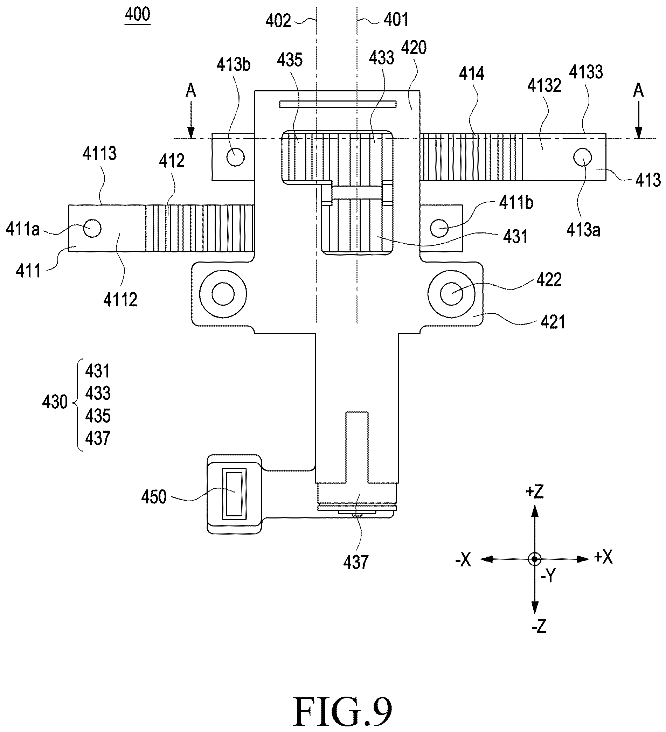

FIG. 9 is a plan view illustrating the driving structure according to an embodiment of the disclosure.

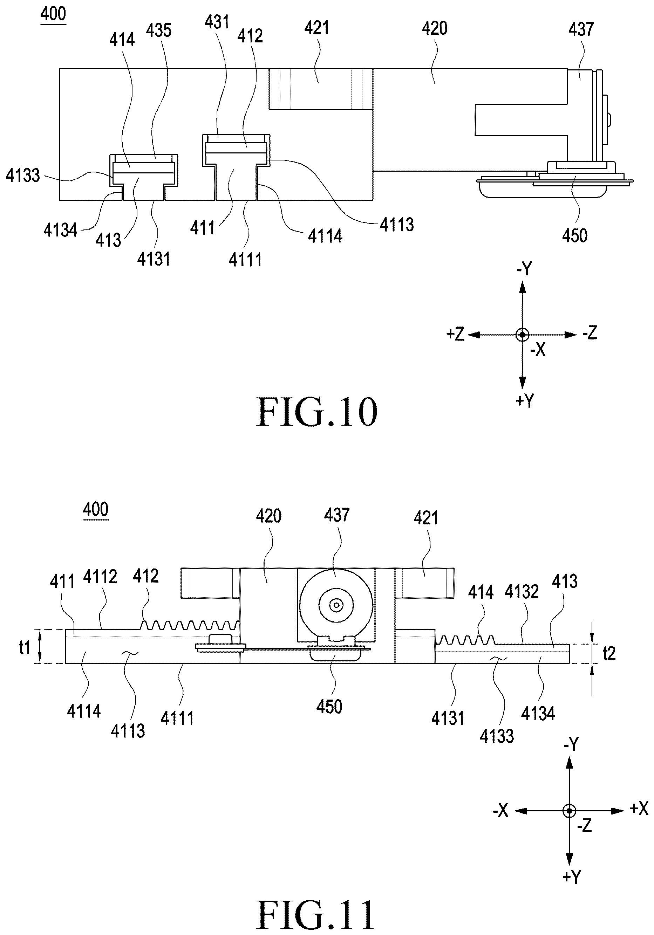

FIG. 10 is a side view illustrating the driving structure according to an embodiment of the disclosure.

FIG. 11 is a side view illustrating the driving structure viewed in a direction different from that of FIG. 10 according to an embodiment of the disclosure.

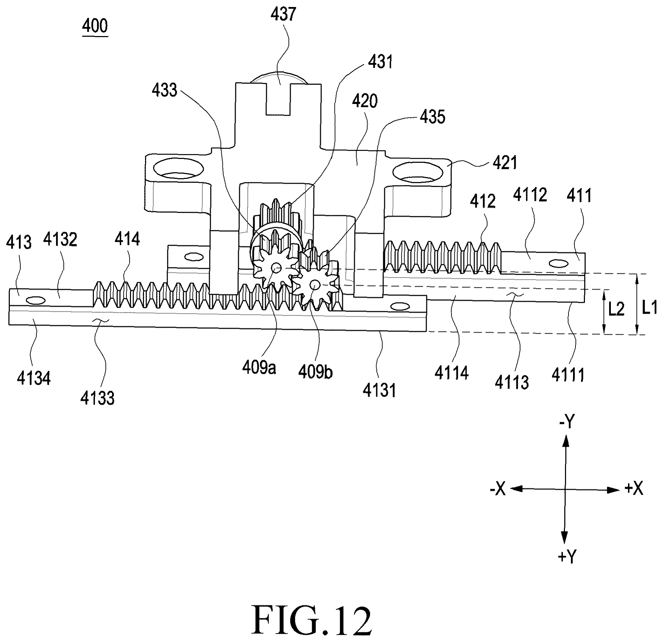

FIG. 12 is a perspective view illustrating the driving structure of FIG. 9 according to an embodiment of the disclosure, viewed along line A-A.

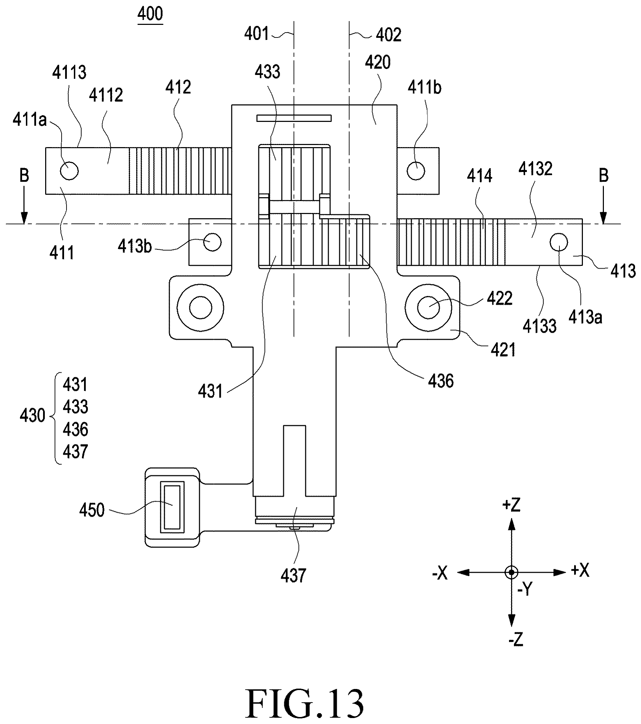

The embodiments of FIGS. 5 to 12 may be combined with the embodiments of FIGS. 1 to 4 or the embodiments of FIGS. 13 to 16.

Referring to FIGS. 5 to 12, the wearable electronic device 201 (e.g., the wearable electronic device 201 of FIGS. 2 to 4) may include a rear case 302, a first through-hole 3021, a second through-hole 3023, a lens bracket 340, a first lens bracket 341, a second lens bracket 343, or a driving structure 400.

The configurations of the rear case 302, the first through-hole 3021, the second through-hole 3023, the lens bracket 340, the first lens bracket 341, the second lens bracket 343, or the driving structure 400 of FIGS. 5 to 12 may be partially or entirely the same as the configurations of the rear case 302, the first through-hole 3021, the second through-hole 3023, the lens bracket 340, the first lens bracket 341, the second lens bracket 343, or the driving structure 400 of FIG. 4.

According to an embodiment, the rear case 302 (e.g., the rear case 302 of FIG. 4) may include the first through-hole 3021 (e.g., the first through-hole 3021 of FIG. 4), the second through-hole 3023 (e.g., the second through-hole 3023 of FIG. 4), a pair of rim members 3022 and 3024, a nose support portion 3025, a connecting member 3027, or a seating portion 3029.

According to an embodiment, the rear case 302 may include the nose support portion 3025 (e.g., the nose support portion 2021 of FIG. 2), which is formed to be at least partially recessed. The rear case 302 may face a user's face or may be in contact with at least a portion of the user's face when the user wears the wearable electronic device 201. The nose support portion 3025 may be positioned on the user's nose or supported by the user's nose.

According to an embodiment, the rear case 302 may include a pair of rim members 3022 and 3024 that respectively define or surround the first through-hole 3021 and the second through-hole 3023. The pair of rim members 3022 and 3024 may be connected to each other via a connecting member 3027.

According to an embodiment, the pair of rim members 3022 and 3024 may include a first rim member 3022 that defines the first through-hole 3021, and a second rim member 3024 that defines the second through-hole 3023.

According to an embodiment, at least a portion of a first lens barrel (e.g., the first lens barrel 331 of FIG. 4) may be disposed inside the first rim member 3022. At least a portion of a second lens barrel (e.g., the second lens barrel 333 of FIG. 4) may be disposed inside the second rim member 3024.

According to an embodiment, the nose support portion 3025 may be defined as an empty space between the first rim member 3022 and the second rim member 3024.

According to an embodiment, the connecting member 3027 may connect the first rim member 3022 and the second rim member 3024. According to an embodiment, the connecting member 3027, the first rim member 3022, and the second rim member 3024 may be integrally manufactured. According to an embodiment, the connecting member 3027, the first rim member 3022, and the second rim member 3024 may also be manufactured as separate members and then assembled.

According to an embodiment, the connecting member 3027 may be a portion that faces the user's forehead or a portion that faces the user's glabella when the user wears the wearable electronic device 201.

According to an embodiment, the rear case 302 may include a seating portion 3029 formed in at least a portion of the connecting member 3027. The seating portion 3029 may be formed by having at least a portion of the connecting member 3027 recessed. At least a portion of the driving structure 400 may be seated in the seating portion 3029. For example, at least a portion of the driving structure 400 may be accommodated in the seating portion 3029 and may be fixed to the seating portion 3029.

According to an embodiment, the seating portion 3029 may provide a space that accommodates at least a portion of a bracket of the driving structure 400 (e.g., the bracket 420 of FIG. 9), the first rack 411, and the second rack 413.

According to an embodiment, the size of the first through-hole 3021 may be greater than the size of the first lens barrel (e.g., the first lens barrel 331 of FIG. 4) (e.g., a size defined by an outer circumferential surface of the first lens barrel) such that the first lens barrel is capable of sliding movement inside the first through-hole 3021.

According to an embodiment, the size of the second through-hole 3023 may be greater than the size of the second lens barrel (e.g., the second lens barrel 333 of FIG. 4) (e.g., a size defined by an outer circumferential surface of the second lens barrel) such that the second lens barrel is capable of sliding movement inside the second through-hole 3023.

According to an embodiment, the lens bracket 340 (e.g., the lens bracket 340 of FIG. 4) may include a first lens bracket 341 (e.g., the first lens bracket 341 of FIG. 4) or a second lens bracket 343 (e.g., the second lens bracket 343 of FIG. 4).

According to an embodiment, the first lens bracket 341 may include a first fixing portion 3411, a first recess 3413, or a first opening 3415.

According to an embodiment, the first lens bracket 341 may include the first fixing portion 3411 to which the first rack 411 is coupled. According to an embodiment, the first fixing portion 3411 may extend toward the second lens bracket 343 from at least a portion of the first lens bracket 341.

According to an embodiment, the first lens bracket 341 may include the first recess 3413 that accommodates or receives at least a portion of the first lens barrel (e.g., the first lens barrel 331 of FIG. 4). The first recess 3413 may be formed by having at least a portion of the first lens bracket 341 recessed.

According to an embodiment, the first lens bracket 341 may include the first opening 3415 that penetrates at least a portion of the first lens bracket 341. The first opening 3415 may provide a space through which at least one flexible printed circuit board (FPCB) may pass. The at least one flexible printed circuit board may electrically connect a first display module (e.g., the first display module 351 of FIG. 4) disposed on the first lens barrel (e.g., the first lens barrel 331 of FIG. 4) to a display driver integrated circuit (DDI) mounted on a circuit board (e.g., the circuit board 360 of FIG. 4).

According to an embodiment, the first lens barrel 331, the first lens (e.g., the first lens 221 of FIG. 3) disposed in the first lens barrel 331, and the first lens bracket 341 may be defined and/or referred to as a first lens assembly 311 (e.g., the first lens assembly 311 of FIG. 44). For example, the first lens assembly 311 may include the first lens barrel 331, the first lens, and the first lens bracket 341. The first lens assembly 311 may slide in a direction in which the first lens assembly 311 becomes relatively closer to or relatively farther from the second lens assembly 313, based on a driving force provided from the driving structure 400.

According to an embodiment, the second lens bracket 343 may include a second fixing portion 3431, a second recess 3433, or a second opening 3435.

According to an embodiment, the second lens bracket 343 may include a second fixing portion 3431 to which the second rack 413 is coupled. According to an embodiment, the second fixing portion 3431 may extend toward the first lens bracket 341 from at least a portion of the second lens bracket 343.

According to an embodiment, the second lens bracket 343 may include the second recess 3433 that accommodates at least a portion of the second lens barrel (e.g., the second lens barrel 343 of FIG. 4). The second recess 3433 may be formed by having at least a portion of the second lens bracket 343 recessed. For example, at least a portion of the second lens barrel may be inserted into or accommodated in the second recess 3433.

According to an embodiment, the second lens bracket 343 may include the second opening 3435 that penetrates at least a portion of the second lens bracket 343. The second opening 3435 may provide a space through which at least one flexible printed circuit board (FPCB) may pass. The at least one flexible printed circuit board may electrically connect a second display module (e.g., the second display module 353 of FIG. 4) disposed on the second lens barrel (e.g., the second lens barrel 333 of FIG. 4) to a display driver integrated circuit (DDI) mounted on a circuit board (e.g., the circuit board 360 of FIG. 4).

According to an embodiment, the second lens barrel 333, the second lens (e.g., the second lens 222 of FIG. 3) disposed in the second lens barrel 333, and the second lens bracket 343 may be defined and/or referred to as a second lens assembly 313 (e.g., the second lens assembly 313 of FIG. 4). For example, the second lens assembly 313 may include the second lens barrel 333, the second lens, and the second lens bracket 343. The second lens assembly 313 may slide in a direction in which the second lens assembly 313 becomes relatively closer to or relatively farther from the first lens assembly 311, based on a driving force provided from the driving structure 400.

According to the illustrated embodiment, the first fixing portion 3411 may be disposed below the second fixing portion 3413. For example, the first fixing portion 3411 may be disposed in parallel with the second fixing portion 3413 and may be disposed below the second fixing portion 3413 (e.g., in the -Z direction of FIG. 5). The position of the first fixing portion 3411 is not limited thereto and may be disposed above the second fixing portion 3413 (e.g., in the +Z direction of FIG. 5).

According to an embodiment, the driving structure 400 may include a first rack 411, a second rack 413, a bracket 420, a driving member 430, or a connecting board 450.

According to an embodiment, the bracket 420 may provide a space in which the first rack 411, the second rack 413, or the driving member (e.g., the driving member 430 of FIG. 9) is installed. In addition, the bracket 420 may be configured to support the first rack 411, the second rack 413, or the driving member.

According to an embodiment, the driving structure 400 may provide a driving force for sliding movement of the first lens bracket 341 and the second lens bracket 343. For example, the first lens bracket 341 and the second lens bracket 343 may slide in a direction in which the first lens bracket 341 and the second lens bracket 343 becomes relatively closer to or relatively farther from each other, based on a driving force provided from the driving structure 400.

According to an embodiment, the driving structure 400 may provide a driving force for adjusting the distance between the optical center of the first lens (e.g., the first lens 221 of FIG. 3) and the optical center of the second lens (e.g., the second lens 222 of FIG. 3).

According to an embodiment, a visual image provided from the first display module (e.g., the first display module 351 of FIG. 4) may be output to a user through the first lens, and a visual image provided from the second display module (e.g., the second display module 353 of FIG. 4) may be output to the user through the second lens.

For example, users wearing the wearable electronic device 201 may have different interpupillary distances (IPD) depending on their individual characteristics or body types.

According to an embodiment, the wearable electronic device 201 may be configured to be capable of adjusting the distance between the optical center of the first lens (e.g., the first lens 221 of FIG. 3) and the optical center of the second lens (e.g., the second lens 222 of FIG. 3). For example, the first lens bracket 341 may slide based on a driving force provided from the driving structure 400. The first lens and the optical center of the first lens may slide together as the first lens barrel 331 fixed to the first lens bracket 341 slides. For example, the second lens bracket 343 may slide based on a driving force provided from the driving structure 400. The second lens and the optical center of the second lens may slide together as the second lens barrel 333 fixed to the second lens bracket 343 slides.

According to an embodiment, the wearable electronic device 201 may be configured to adjust the distance between the optical center of the first lens and the optical center of the second lens so as to correspond to a user's interpupillary distance (IPD).

According to an embodiment, the wearable electronic device 201 may be configured to adjust the distance between the optical center of the first lens and the optical center of the second lens by controlling the driving structure 400 based on a user input (e.g., a key input).

According to an embodiment, the wearable electronic device 201 may detect the user's interpupillary distance (IPD) by tracking the user's gaze using a face-tracking camera module (e.g., the face-tracking camera module 225 of FIG. 3). The wearable electronic device 201 (or the processor 120 of FIG. 1) may be configured to control the driving structure 400 to adjust the distance between the optical center of the first lens and the optical center of the second lens, based on the detected interpupillary distance of the user.

According to an embodiment, by adjusting the distance between the optical center of the first lens and the optical center of the second lens to correspond to the user's interpupillary distance (IPD), the user may obtain a good focus on visual images output from the first display module (e.g., the first display module 351 of FIG. 4) and the second display module (e.g., the second display module 353 of FIG. 4).

According to an embodiment, the driving structure 400 may include the first rack 411 coupled to at least a portion of the first lens assembly 311, or the second rack 413 coupled to at least a portion of the second lens assembly 313.

According to an embodiment, the first rack 411 may be coupled to the first fixing portion 3411 of the first lens bracket 341. The second rack 413 may be coupled to the second fixing portion 3431 of the second lens bracket 343.

According to an embodiment, the first rack 411 may include a first surface 4111, a second surface 4112, a first side surface 4113, first gear teeth 412, or at least one first groove 4114.

According to an embodiment, the first surface 4111 may be coupled to at least a portion of the first lens assembly 311. The first surface 4111 may face a direction opposite to the second surface 4112.

According to an embodiment, the first surface 4111 may face a direction in which the user looks or a direction in which the wearable electronic device 201 is oriented (e.g., the +Y direction of FIGS. 2 to 3 or the +Y direction of FIGS. 5 to 12). The second surface 4112 may face a direction toward the user (e.g., the -Y direction of FIGS. 2 to 3 or the -Y direction of FIGS. 5 to 12). According to an embodiment, the first surface 4111 may face a direction toward the user (e.g., the -Y direction of FIGS. 2 to 3 or the -Y direction of FIGS. 5 to 12), and the second surface 4112 may face a direction in which the user looks or a direction in which the wearable electronic device 201 is oriented (e.g., the +Y direction of FIGS. 2 to 3 or the +Y direction of FIGS. 5 to 12).

According to an embodiment, the gear teeth (e.g., the first gear teeth 412) of the first rack 411 may be formed on the second surface 4112 of the first rack 411. According to an embodiment, the first gear teeth 412 may be operatively connected to at least a portion of the driving member 430. The first gear teeth 412 may be coupled so as to mesh with the first pinion 431 of the driving member 430.

According to an embodiment, the first rack 411 may include a side surface (e.g., the first side surface 4113) that connects the first surface 4111 and the second surface 4112. At least one first groove 4114 may be formed on the first side surface 4113 of the first rack 411. The first groove 4114 may be formed by having at least a portion of the first side surface 4113 recessed. At least a portion of the bracket 420 may be disposed in or inserted into the first groove 4114. The first rack 411 may be restricted from being detached from the bracket 420 as the first groove 4114 is fixedly engaged with at least a portion of the bracket 420.

According to an embodiment, the first rack 411 may include a pair of first holes 411a and 411b that penetrate the first surface 4111 and the second surface 4112. The pair of first holes 411a and 411b may be formed at positions respectively adjacent to opposite ends of the first rack 411. According to an embodiment, the pair of first holes 411a and 411b may include a (1-1)^{th} hole 411a and a (1-2)^{th} hole 411b. The (1-1)^{th} hole 411a may be formed adjacent to one end of the first rack 411 (e.g., an end facing the -X direction of FIG. 9), and the (1-2)^{th} hole 411b may be formed adjacent to the other end of the first rack 411 (e.g., an end facing the +X direction of FIG. 9).

According to an embodiment, the (1-1)^{th} hole 411a and the (1-2)^{th} hole 411b may provide spaces into which fastening members (e.g., bolts or pins) are inserted when the first rack 411 and the first fixing portion 3411 of the first lens bracket 341 are coupled.

According to an embodiment, the (1-2)^{th} hole 411b may be disposed relatively closer to the second lens bracket 343 than the (1-1)^{th} hole 411a.

According to an embodiment, the second rack 413 may include a third surface 4131, a fourth surface 4132, a second side surface 4133, gear teeth (e.g., second gear teeth 414), or at least one second groove 4134.

According to an embodiment, the third surface 4131 may be coupled to at least a portion of a second lens assembly (333, 343). The third surface 4131 may face a direction opposite to the fourth surface 4132.

According to an embodiment, the third surface 4131 may face a direction in which the user looks or a direction in which the wearable electronic device 201 is oriented (e.g., the +Y direction of FIGS. 2 to 3 or the +Y direction of FIGS. 5 to 12). The fourth surface 4132 may face a direction toward the user (e.g., the -Y direction of FIGS. 2 and 3 or the -Y direction of FIGS. 5 to 12). According to an embodiment, the third surface 4131 may face a direction toward the user (e.g., the -Y direction of FIGS. 2 to 3 or the -Y direction of FIGS. 5 to 12), and the fourth surface 4132 may face a direction in which the user looks or a direction in which the wearable electronic device 201 is oriented (e.g., the +Y direction of FIGS. 2 to 3 or the +Y direction of FIGS. 5 to 12).

According to an embodiment, the first surface 4111 of the first rack 411 may face substantially the same direction as the third surface 4131 of the second rack 413. In addition, the second surface 4112 of the first rack 411 may face substantially the same direction as the fourth surface 4132 of the second rack 413.

According to an embodiment, the gear teeth (e.g., the second gear teeth 414) of the second rack 413 may be formed on the fourth surface 4132 of the second rack 413. According to an embodiment, the second gear teeth 414 may be operatively connected to at least a portion of the driving member 430. The second gear teeth 414 may be coupled so as to mesh with the third pinion 435 of the driving member 430.

According to an embodiment, the second rack 413 may include a side surface (e.g., the second side surface 4133) that connects the third surface 4131 and the fourth surface 4132. At least one second groove 4134 may be formed on a side surface of the second rack 413. The second groove 4134 may be formed by having at least a portion of the second side surface 4133 of the second rack 413 recessed. At least a portion of the bracket 420 may be disposed in or inserted into the second groove 4134. The second rack 413 may be restricted from being detached from the bracket 420 as the second groove 4134 is fixedly engaged with at least a portion of the bracket 420.

According to an embodiment, the second rack 413 may include a pair of second holes 413a and 413b that penetrate the third surface 4131 and the fourth surface 4132. The pair of second holes 413a and 413b may be formed at positions respectively adjacent to opposite ends of the second rack 413. According to an embodiment, the pair of second holes 413a and 413b may include a (2-1)^{th} hole 413a and a (2-2)^{th} hole 413b. The (2-1)^{th} hole 413a may be formed adjacent to one end of the second rack 413 (e.g., an end facing the +X direction of FIG. 9), and the (2-2)^{th} hole 413b may be formed adjacent to the other end of the second rack 413 (e.g., an end facing the -X direction of FIG. 9).

According to an embodiment, the (2-1)^{th} hole 413a and the (2-2)^{th} hole 413b may provide spaces into which fastening members (e.g., bolts or pins) are inserted when the second rack 413 and the second fixing portion 3431 of the second lens bracket 343 are coupled.

According to an embodiment, the (2-2)^{th} hole 413b may be disposed relatively closer to the first lens bracket 341 than the (2-1)^{th} hole 413a.

According to an embodiment, the first rack 411 and the second rack 413 may be spaced apart from each other. In addition, the first rack 411 may be disposed parallel to the second rack 413. Each of the first rack 411 and the second rack 413 may be supported by the bracket 420 and may be disposed so as to extend across the inside of the bracket 420.

According to an embodiment, opposite ends of the first rack 411 and/or opposite ends of the second rack 413 may be exposed to the outside of the bracket 420. In addition, the first rack 411 and/or the second rack 413 may slide on the bracket 420.

According to an embodiment, the drive member 430 may be configured to generate a driving force for sliding the first rack 411 and the second rack 413. Hereinafter, the motor 437 of the drive member 430 is described as providing the driving force, but the drive member 430 is not limited thereto. For example, at least a portion of the drive member 430 may be exposed to the outside of a housing (e.g., the first housing 310 of FIG. 4), and the drive member 430 may be configured to generate the driving force for sliding the first rack 411 and the second rack 413 by rotating, based on an external force applied by a user, at least the portion of the drive member 430 exposed to the outside of the housing.

According to an embodiment, the bracket 420 may accommodate at least a portion of the drive member 430, at least a portion of the first rack 411, and at least a portion of the second rack 413. The bracket 420 may be fixed to or disposed on the seating portion 3029 of the rear case 302. According to an embodiment, at least a portion of the bracket 420 and/or at least a portion of the driving structure 400 may be fixed to or disposed on the display support member (e.g., the display support member 303 of FIG. 4).

According to an embodiment, the bracket 420 may include a wing portion 421 and a coupling hole 422 formed in the wing portion 421. The wing portion 421 may protrude or extend from at least a portion of the bracket 420. A pair of wing portions 421 may be provided, but the disclosure is not limited thereto. The coupling hole 422 may be formed to penetrate at least a portion of the wing portion 421. When the bracket 420 is coupled to the seating portion 3029 of the rear case 302, a fastening member (e.g., a bolt or a pin) may be inserted into the coupling hole 422.

According to an embodiment, the drive member 430 may include a motor 437, a first pinion 431, a second pinion 433, or a third pinion 435.

According to an embodiment, the drive member 430 may include a first shaft (e.g., the first shaft 409a of FIG. 12) or a second shaft (e.g., the second shaft 409b of FIG. 12).

According to an embodiment, the first shaft 409a may be connected to the motor 437 and may be rotated based on rotation of the motor 437. The first shaft 409a may also be defined as a portion of the motor 437.

According to an embodiment, the second shaft 409b may be spaced apart from the first shaft 409a and may be rotatably coupled to the bracket 420. For example, the bracket 420 may rotatably support the second shaft 409b.

Referring to FIG. 9, the figure illustrates an imaginary first line 401 drawn along an extending direction (or axial direction) of the first shaft 409a, and an imaginary second line 402 drawn along an extending direction (or axial direction) of the second shaft 409b. The first line 401 may be spaced apart from the second line 402. The distance by which the second line 402 is spaced apart from the first line 401 may be defined as a distance by which the center of an axis of the second shaft 409b is spaced apart from the center of an axis of the first shaft 409a. The distance by which the second line 402 is spaced apart from the first line 401 may be determined by the second pinion 433 and the third pinion 435. For example, a sum of the radius of the second pinion 433 and the radius of the third pinion 435 may be defined as a distance by which the center of the axis of the second shaft 409b is spaced apart from the center of the axis of the first shaft 409a. For example, when the diameter of the second pinion 433 and the diameter of the third pinion 435 are in a substantially 1:1 relationship, the diameter of the second pinion 433 (or the third pinion 435) may be substantially the same as the distance by which the second line 402 is spaced apart from the first line 401. The distance by which the second line 402 is spaced apart from the first line 401 may be defined as an amount (or a distance) of movement with respect to the center line of the motor 437.

According to an embodiment, the first pinion 431 and/or the second pinion 433 may be coupled to the first shaft 409a. For example, the first pinion 431 and/or the second pinion 433 may be disposed on the first line 401. The first pinion 431 may be spaced apart from the second pinion 433 on the first line 401.

According to an embodiment, the first pinion 431 may be configured to mesh with the first gear teeth 412 of the first rack 411. The second pinion 433 may be configured to mesh with the third pinion 435.

According to an embodiment, the third pinion 435 may be coupled to the second shaft 409b. For example, the third pinion 435 may be disposed on the second line 402.

According to an embodiment, at least a portion of the third pinion 435 may be configured to mesh with the second gear teeth 414 of the second rack 413. Another portion of the third pinion 435 may be configured to mesh with the second pinion 433.

According to an embodiment, the first pinion 431 and/or the second pinion 433 may be rotated together with the first shaft 409a as the first shaft 409a rotates.

According to an embodiment, the first rack 411 may slide on the bracket 420 based on rotation of the first pinion 431.

According to an embodiment, the third pinion 435 may be rotated in a direction opposite to a rotation direction of the second pinion 433 based on rotation of the second pinion 433.

According to an embodiment, the second rack 413 may slide on the bracket 420 based on rotation of the third pinion 435.

According to an embodiment, the second pinion 433 may be rotated in the same direction as the first pinion 431, and the third pinion 435 may be rotated in a direction opposite to the second pinion 433. The third pinion 435 may be rotated in a direction opposite to the first pinion 431. Accordingly, as the first pinion 431 coupled to the first rack 411 and the second pinion 433 coupled to the second rack 413 are rotated in directions opposite to each other, the first rack 411 and the second rack 413 may slide in directions opposite to each other.

According to an embodiment, when the motor 437 and the first shaft 409a are rotated in one direction, the first pinion 431 may be rotated in the one direction, and the third pinion 435 may be rotated in the other direction opposite to the one direction. Accordingly, the first rack 411 operatively connected to the first pinion 431 may slide in a first sliding direction, and the second rack 413 operatively connected to the third pinion 435 may slide in a second sliding direction opposite to the first sliding direction.

According to an embodiment, the first rack 411 and the second rack 413 may slide in directions opposite to each other based on rotation of the motor 437. For example, when the first rack 411 slides in a direction toward the second lens bracket 343 (e.g., the +X direction of FIGS. 5 to 12), the second rack 413 may slide in a direction toward the first lens bracket 341 (e.g., the -X direction of FIGS. 5 to 12). For example, when the first rack 411 slides in a direction away from the second lens bracket 343 (e.g., the -X direction of FIGS. 5 to 12), the second rack 413 may slide in a direction away from the first lens bracket 341 (e.g., the +X direction of FIGS. 5 to 12).

According to an embodiment, as the first rack 411 and the second rack 413 slide in directions opposite to each other, the first lens bracket 341 and the second lens bracket 343 may slide in directions opposite to each other.

According to an embodiment, the first lens barrel 331 and the first lens (e.g., the first lens 221 of FIG. 3) coupled thereto may slide in a direction opposite to the second lens barrel 333 and the second lens (e.g., the second lens 222 of FIG. 3) coupled thereto.

According to an embodiment, the first lens and the second lens may slide toward each other or may slide away from each other. Accordingly, the distance between the optical center of the first lens and the optical center of the second lens may be adjusted to correspond to a user's interpupillary distance (IPD).

Referring to FIG. 7, a first state in which the first lens bracket 341 and the second lens bracket 343 are relatively close to each other is illustrated. The first lens bracket 341 and the second lens bracket 343 are illustrated as being spaced apart by a first distance D1.

Referring to FIG. 8, a second state in which the first lens bracket 341 and the second lens bracket 343 are relatively far from each other is illustrated. The first lens bracket 341 and the second lens bracket 343 are illustrated as being spaced apart by a second distance D2. The second distance D2 may be greater than the first distance D1.

Referring to FIGS. 7 and 8, the first lens bracket 341 and the second lens bracket 343 may slide in a direction in which the first lens bracket 341 and the second lens bracket 343 become relatively closer to or relatively farther from each other. For example, the first lens assembly 311 and the second lens assembly 313 may slide in a direction in which the first lens assembly 311 and the second lens assembly 313 become relatively closer to or relatively farther from each other.

When the first lens bracket 341 and the second lens bracket 343 slide in a direction in which the first lens bracket 341 and the second lens bracket 343 become relatively closer to each other, the first lens barrel 331 and the second lens barrel 333 may slide in a direction in which the first lens barrel 331 and the second lens barrel 333 become relatively closer to each other. Accordingly, the distance between the optical center of the first lens and the optical center of the second lens may be reduced. For example, sliding of the first lens bracket 341 and the second lens bracket 343 in a direction in which the first lens bracket 341 and the second bracket 343 become relatively closer to each other may be defined as sliding in a direction in which the distance between the optical center of the first lens and the optical center of the second lens is decreased.

When the first lens bracket 341 and the second lens bracket 343 slide in a direction in which the first lens bracket 341 and the second lens bracket 343 become relatively farther from each other, the first lens barrel 331 and the second lens barrel 333 may slide in a direction in which the first lens bracket 341 and the second lens bracket 343 become relatively farther from each other. Accordingly, the distance between the optical center of the first lens and the optical center of the second lens may be increased. For example, sliding of the first lens bracket 341 and the second lens bracket 343 in a direction in which the first lens bracket 341 and the second lens bracket 343 become relatively farther from each other may be defined as sliding in a direction in which the distance between the optical center of the first lens and the optical center of the second lens is increased.

According to an embodiment, the motor 437 may receive power and signals through the connecting board 450. For example, the connecting board 450 (e.g., an FPCB) may be electrically connected to a battery (e.g., the battery 189 of FIG. 1) or to a processor (e.g., the processor 120 of FIG. 1) mounted on a circuit board (e.g., the circuit board 360 of FIG. 4).

According to an embodiment, the second pinion 433 may be configured to mesh with the third pinion 435 and may be spaced apart from the second rack 413. For example, the second pinion 433 may be indirectly and operatively connected to the second rack 413 via the third pinion 435.

According to an embodiment, the first shaft 409a may be disposed at a position spaced apart from the third surface 4131 of the second rack 413 by a first distance L1. For example, the first shaft 409a may be spaced apart from the third surface 4131 by the first distance L1 based on a direction perpendicular to, or a vertical direction with respect to the third surface 4131 of the second rack 413 (e.g., the Y-axis direction of FIG. 12). For example, the first shaft 409a may be positioned at the first distance L1 from the third surface 4131 (or from the first surface 4111).

According to an embodiment, the second shaft 409b may be disposed at a position spaced apart from the third surface 4131 of the second rack 413 by a second distance L2. For example, the second shaft 409b may be spaced apart from the third surface 4131 by the second distance L2 based on a direction perpendicular to, or a vertical direction with respect to the third surface 4131 of the second rack 413 (e.g., the Y-axis direction of FIG. 12). For example, the second shaft 409b may be positioned at the second distance L1 from the third surface 4131 (or from the first surface 4111). The second distance L2 may be smaller than the first distance L1. For example, to prevent interference between the second pinion 433 and the second rack 413, the first shaft 409a may be disposed at a position spaced apart from the third surface 4131 of the second rack 413 by the first distance L1, and the second shaft 409b may be disposed at a position spaced apart from the third surface 4131 of the second rack 413 by the second distance L2. Accordingly, a structure may be provided in which the second pinion 433 coupled to the first shaft 409a is spaced apart from the second rack 413, and the third pinion 435 coupled to the second shaft 409b meshes with the second rack 413. According to an embodiment, the third pinion 435 may have a larger diameter than the second pinion 433, and the number of gear teeth of the third pinion 435 may be greater than the number of gear teeth of the second pinion 433. In such a case, even when the first shaft 409a and the second shaft 409b are positioned at the same distance from the third surface 4131 of the second rack 413, a structure may be provided in which the second pinion 433 is spaced apart from the second rack 413, and the third pinion 435 coupled to the second shaft 409b meshes with the second rack 413.

According to an embodiment, the first surface 4111 of the first rack 411 may be disposed on substantially the same plane as the third surface 4131 of the second rack 413. For example, the first surface 4111 of the first rack 411 may form a substantially planar surface with the third surface 4131 of the second rack 413.

According to an embodiment, the first pinion 431 may be configured to mesh with the first rack 411, and the second pinion 433 may be configured to be spaced apart from the second rack 413.

According to an embodiment, since the first pinion 431 and the second pinion 433 are disposed on the first shaft 409a, the first rack 411 may have a greater thickness than the second rack 413 so as to mesh with the first pinion 431.

According to an embodiment, the first rack 411 may have a first thickness t1, which is a thickness from the first surface 4111 to the second surface 4112, and the second rack 413 may have a second thickness t2, which is a thickness from the third surface 4131 to the fourth surface 4132. According to an embodiment, the first thickness t1 may be greater than the second thickness t2. According to an embodiment, the first pinion 431 may have a larger diameter than the second pinion 433. In such a case, even when the first thickness t1 is substantially the same as the second thickness t2, or even when the first thickness t1 is smaller than the second thickness t2, a structure may be provided in which the first pinion 431 is configured to mesh with the first rack 411, and the second pinion 433 is spaced apart from the second rack 413.

According to an embodiment, the third pinion 435 may be disposed at one side of the second pinion 431. For example, the third pinion 435 may be disposed, with respect to the second pinion 433, at a side in a direction in which the distance between the optical centers of the first lens and the second lens is decreased (e.g., the -X direction of FIG. 9) among the sliding directions of the second rack 413. For example, the second pinion 435 may be disposed closer to the (2-2)^{th} hole 413b than to the (2-1)^{th} hole 413a.

According to an embodiment, the second rack 413, the second pinion 433, and the third pinion 435 may be disposed relatively farther from the motor 437 than the first rack 411 and the first pinion 431.

According to an embodiment, the first surface 4111 (or the second surface 4112) of the first rack 411 and/or the third surface 4131 (or the fourth surface 4132) of the second rack 413 may face a direction in which the wearable electronic device 201 is oriented (e.g., the +Y direction of FIGS. 2 to 12), and/or a direction toward a user (e.g., the -Y direction of FIGS. 2 to 12). Accordingly, the first shaft 409a connected to the motor 437 may extend in a direction substantially perpendicular to the direction in which the wearable electronic device 201 is oriented and the direction toward the user (e.g., the Z-axis direction of FIGS. 2 to 12). For example, an axial direction of the first shaft 409a (e.g., the Z-axis direction of FIGS. 9 to 12) may be a direction substantially perpendicular to the direction in which the wearable electronic device 201 is oriented and the direction toward the user. For example, the axial direction of the first shaft 409a may be substantially perpendicular to a thickness direction (e.g., the Y-axis direction of FIGS. 2 to 12) of the first housing (e.g., the first housing 202 of FIGS. 2 to 3 or the first housing 310 of FIG. 4). The axial direction of the first shaft may be substantially the same as a height direction (or an up-down direction) of the first housing (e.g., the Z-axis direction of FIGS. 2 to 12). Accordingly, as the first shaft 409a extends in the height direction of the first housing, the first shaft 409a and the motor 437 may occupy a relatively small region inside the first housing in the thickness direction of the first direction (e.g., the Y-axis direction of FIGS. 2 to 12), compared to when the axial direction of the first shaft extends or is positioned in the thickness direction of the first housing (e.g., the Y-axis direction of FIGS. 2 to 12). Accordingly, a thickness of the first housing in the thickness direction (e.g., a thickness in the Z-axis direction of FIGS. 2 to 12) for accommodating the first shaft 409a and the motor 437 may become relatively smaller compared to when the axial direction of the first shaft extends or is positioned in the thickness direction of the first direction (e.g., the Y-axis direction of FIGS. 2 to 12). In addition, as the driving structure 400 including the first shaft 409a and the motor 437 is disposed on a seating portion 3029 formed in the connecting member 3027 for connecting the first rim member 3022 and the second rim member 3024, space utilization of the first housing may be improved, thereby reducing an overall size of the wearable electronic device 201.

FIG. 13 is a plan view illustrating a driving structure according to an embodiment of the disclosure.

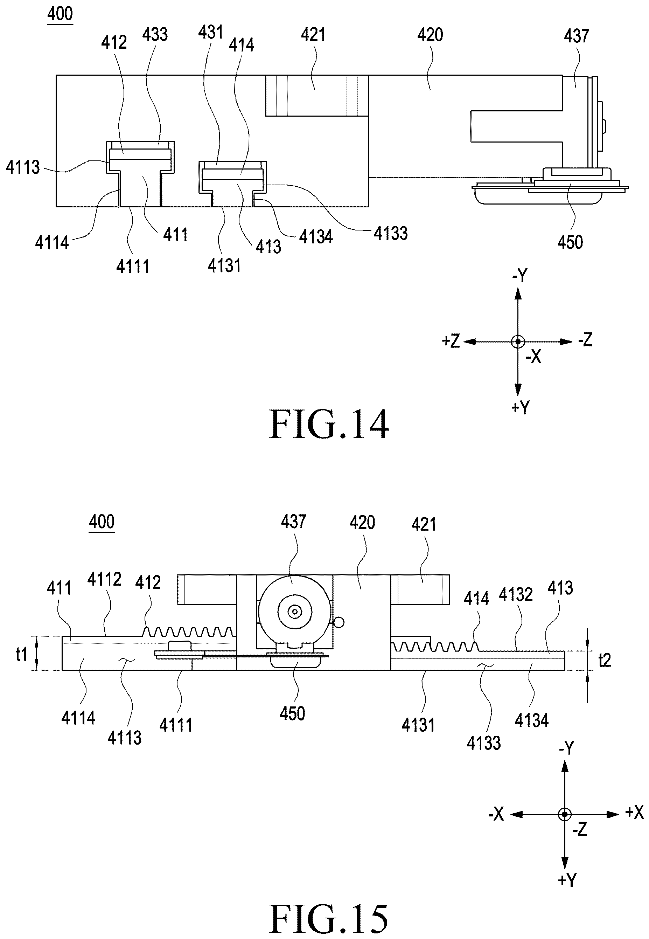

FIG. 14 is a side view illustrating the driving structure according to an embodiment of the disclosure.

FIG. 15 is a side view illustrating the driving structure according to an embodiment of the disclosure as viewed from a direction different from that of FIG. 14.

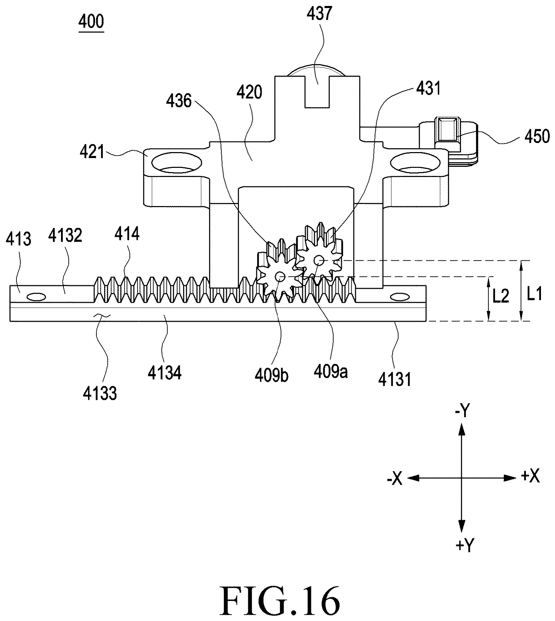

FIG. 16 is a perspective view illustrating the driving structure according to an embodiment of the disclosure, obtained by cutting along line B-B of FIG. 13.

The embodiments of FIGS. 13 to 16 may be combined with the embodiments of FIGS. 1 to 12.

Referring to FIGS. 13 to 16, a wearable electronic device (e.g., the wearable electronic device 201 of FIGS. 2 to 5) may include a driving structure 400 (e.g., the driving structure 400 of FIGS. 5 to 12).

Referring to FIGS. 13 to 16, the driving structure 400 may include a first shaft 409a, a second shaft 409b, a first rack 411, first gear teeth 412, a (1-1)^{th} hole 411a, a (1-2)^{th} hole 411b, a first surface 4111, a second surface 4112, a first side surface 4111, at least one first groove 4114, a second rack 413, second gear teeth 413, a (2-1)^{th} hole 413a, a (2-2)^{th} hole 413b, a third surface 4131, a fourth surface 4132, a second side surface 4133, at least one second groove 4134, a bracket 420, a wing portion 421, a coupling hole 422, a first pinion 431, a second pinion 433, a third pinion 436, a motor 437, or a connecting board 450.

Configurations of the first shaft 409a, the second shaft 409b, the first rack 411, the first gear teeth 412, the (1-1)^{th} hole 411a, the (1-2)^{th} hole 411b, the first surface 4111, the second surface 4112, the first side surface 4113, the at least one first groove 4114, the second rack 413, the second gear teeth 413, the (2-1)^{th} hole 413a, the (2-2)^{th} hole 413b, the third surface 4131, the fourth surface 4132, the second side surface 4133, the at least one second groove 4134, the bracket 420, the wing portion 421, the coupling hole 422, the driving structure 400, the first pinion 431, the second pinion 433, the third pinion 436, the motor 437, or the connecting board 450 of FIGS. 13 to 16 may be partially or entirely the same as configurations of the first shaft 409a, the second shaft 409b, the first rack 411, the first gear teeth 412, the (1-1)^{th} hole 411a, the (1-2)^{th} hole 411b, the first surface 4111, the second surface 4112, the first side surface 4113, the at least one first groove 4114, the second rack 413, the second gear teeth 413, the (2-1)^{th} hole 413a, the (2-2)^{th} hole 413b, the third surface 4131, the fourth surface 4132, the second side surface 4133, the at least one second groove 4134, the bracket 420, the wing portion 421, the coupling hole 422, the driving structure 400, the first pinion 431, the second pinion 433, the third pinion 435, the motor 437, or the connecting board 450 of FIGS. 9 to 12.

According to an embodiment, the driving structure 400 may provide a driving force for adjusting the distance between the optical center of the first lens (e.g., the first lens 221 of FIG. 3) and the optical center of the second lens (e.g., the second lens 222 of FIG. 3).

According to an embodiment, the first rack 411 may include a first surface 4111, a second surface 4112, a first side surface 4113, first gear teeth 412, or at least one first groove 4114.

According to an embodiment, the first rack 411 may be coupled to at least a portion (e.g., the first lens bracket 341 of FIG. 5) of the first lens assembly (e.g., the first lens assembly 311 of FIGS. 4, 5, 7, and 8). The first surface 4111 may face a direction opposite to the second surface 4112.

According to an embodiment, the first surface 4111 may face a direction in which the user looks or a direction in which the wearable electronic device 201 is oriented (e.g., the +Y direction of FIGS. 2 to 3 or the +Y direction of FIGS. 13 to 16). The second surface 4112 may face a direction toward the user (e.g., the -Y direction of FIGS. 2 to 3 or the -Y direction of FIGS. 13 to 16). According to an embodiment, the first surface 4111 may face a direction toward the user (e.g., the -Y direction of FIGS. 2 to 3 or the -Y direction of FIGS. 13 to 16), and the second surface 4112 may face a direction in which the user looks or a direction in which the wearable electronic device 201 is oriented (e.g., the +Y direction of FIGS. 2 to 3 or the +Y direction of FIGS. 13 to 16).

According to an embodiment, the gear teeth (e.g., the first gear teeth 412) of the first rack 411 may be formed on the second surface 4112 of the first rack 411. According to an embodiment, the first gear teeth 412 may be operatively connected to at least a portion of the driving member 430. The first gear teeth 412 may be coupled so as to mesh with the second pinion 433 of the driving member 430.

According to an embodiment, the first rack 411 may include a side surface (e.g., the first side surface 4113) that connects the first surface 4111 and the second surface 4112. At least one first groove 4114 may be formed on the side surface 4113 of the first rack 411. The first groove 4114 may be formed by having at least a portion of the first side surface 4113 of the first rack 411 recessed. At least a portion of the bracket 420 may be disposed in or inserted into the first groove 4114. The first rack 411 may be restricted from being detached from the bracket 420 as the first groove 4114 is fixedly engaged with at least a portion of the bracket 420.

According to an embodiment, the first rack 411 may include a pair of first holes 411a and 411b that penetrate the first surface 4111 and the second surface 4112. The pair of first holes 411a and 411b may be formed at positions respectively adjacent to opposite ends of the first rack 411. According to an embodiment, the pair of first holes 411a and 411b may include a (1-1)^{th} hole 411a and a (1-2)^{th} hole 411b. The (1-1)^{th} hole 411a may be formed adjacent to one end of the first rack 411 (e.g., an end facing the -X direction of FIG. 13), and the (1-2)^{th} hole 411b may be formed adjacent to the other end of the first rack 411 (e.g., an end facing the +X direction of FIG. 13).

According to an embodiment, the (1-1)^{th} hole 411a and the (1-2)^{th} hole 411b may provide a space into which a fastening member (e.g., a bolt or a pin) is inserted when the first rack 411 and the first fixing portion (e.g., the first fixing portion 3411 of FIG. 5) of the first lens bracket (e.g., the first lens bracket 341 of FIGS. 5 to 8) are coupled.

According to an embodiment, the (1-2)^{th} hole 411b may be disposed relatively closer to the second lens bracket (e.g., the second lens bracket 343 of FIGS. 5 to 8) than the (1-1)^{th} hole 411a.

According to an embodiment, the second rack 413 may include a third surface 4131, a fourth surface 4132, a second side surface 4133, second gear teeth 414, or at least one second groove 4134.

According to an embodiment, the third surface 4131 may be coupled to at least a portion (e.g., the second lens bracket 343 of FIG. 5) of the second lens assembly (e.g., the second lens assembly 313 of FIGS. 4, 5, 7, and 8). The third surface 4131 may face a direction opposite to the fourth surface 4132.

According to an embodiment, the third surface 4131 may face a direction in which the user looks or a direction in which the wearable electronic device 201 is oriented (e.g., the +Y direction of FIGS. 2 to 3 or the +Y direction of FIGS. 13 to 16). The fourth surface 4132 may face a direction toward the user (e.g., the -Y direction of FIGS. 2 and 3 or the -Y direction of FIGS. 13 to 16). According to an embodiment, the third surface 4131 may face a direction toward the user (e.g., the -Y direction of FIGS. 2 to 3 or the -Y direction of FIGS. 13 to 16), and the fourth surface 4132 may face a direction in which the user looks or a direction in which the wearable electronic device 201 is oriented (e.g., the +Y direction of FIGS. 2 to 3 or the +Y direction of FIGS. 13 to 16).

According to an embodiment, the first surface 4111 of the first rack 411 may face substantially the same direction as the third surface 4131 of the second rack 413. In addition, the second surface 4112 of the first rack 411 may face substantially the same direction as the fourth surface 4132 of the second rack 413.

According to an embodiment, the gear teeth (e.g., the second gear teeth 414) of the second rack 413 may be formed on the fourth surface 4132 of the second rack 413. According to an embodiment, the second gear teeth 414 may be operatively connected to at least a portion of the driving member 430. The second gear teeth 414 may be coupled so as to mesh with the third pinion 436 of the driving member 430.

According to an embodiment, the second rack 413 may include a side surface (e.g., the second side surface 4134) that connects the third surface 4131 and the fourth surface 4132. At least one second groove 4134 may be formed on the second side surface 4134 of the second rack 413. The second groove 4134 may be formed by having at least a portion of the second side surface 4134 of the second rack 413 recessed. At least a portion of the bracket 420 may be disposed in or inserted into the second groove 4134. The second rack 413 may be restricted from being detached from the bracket 420 as the second groove 4134 is fixedly engaged with at least a portion of the bracket 420.

According to an embodiment, the second rack 413 may include a pair of second holes 413a and 413b that penetrate the third surface 4131 and the fourth surface 4132. The pair of second holes 413a and 413b may be formed at positions respectively adjacent to opposite ends of the second rack 413. According to an embodiment, the pair of second holes 413a and 413b may include a (2-1)^{th} hole 413a and a (2-2)^{th} hole 413b. The (2-1)^{th} hole 413a may be formed adjacent to one end of the second rack 413 (e.g., an end facing the +X direction of FIG. 13), and the (2-2)^{th} hole 413b may be formed adjacent to the other end of the second rack 413 (e.g., an end facing the -X direction of FIG. 13).

According to an embodiment, the (2-1)^{th} hole 413a and the (2-2)^{th} hole 413b may provide a space into which a fastening member (e.g., a bolt or a pin) is inserted when the second rack 413 and the second fixing portion (e.g., the second fixing portion 3431 of FIG. 5) of the second lens bracket (e.g., the second lens bracket 343 of FIGS. 5 to 8) are coupled.

According to an embodiment, the (2-2)^{th} hole 413b may be disposed relatively closer to the first lens bracket (e.g., the first lens bracket 341 of FIGS. 5 to 8) than the (2-1)^{th} hole 413a.

According to an embodiment, the first rack 411 and the second rack 413 may be spaced apart from each other. In addition, the first rack 411 may be disposed parallel to the second rack 413. Each of the first rack 411 and the second rack 413 may be supported by the bracket 420 and may be disposed so as to extend across the inside of the bracket 420.

According to an embodiment, opposite ends of the first rack 411 and/or opposite ends of the second rack 413 may be exposed to the outside of the bracket 420. In addition, the first rack 411 and/or the second rack 413 may slide on the bracket 420.

According to an embodiment, the drive member 430 may be configured to generate a driving force for sliding the first rack 411 and the second rack 413.

According to an embodiment, the bracket 420 may accommodate at least a portion of the drive member 430, at least a portion of the first rack 411, and at least a portion of the second rack 413. The bracket 420 may be fixed to a seating portion (e.g., the seating portion 3029 of FIG. 5) of a rear case (e.g., the rear case 302 of FIG. 5). According to an embodiment, at least a portion of the bracket 420 and/or at least a portion of the driving structure 400 may be fixed to the display support member (e.g., the display support member 303 of FIG. 4).

According to an embodiment, the bracket 420 may include a wing portion 421 and a coupling hole 422 formed in the wing portion 421. The wing portion 421 may protrude or extend from at least a portion of the bracket 420. A pair of wing portions 421 may be provided, but the disclosure is not limited thereto. The coupling hole 422 may be formed to penetrate at least a portion of the wing portion 421. When the bracket 420 is coupled to the seating portion 3029 of the rear case 302, a fastening member (e.g., a bolt or a pin) may be inserted into the coupling hole 422.

According to an embodiment, the drive member 430 may include a motor 437, a first pinion 431, a second pinion 433, or a third pinion 436.

According to an embodiment, the drive member 430 may include a first shaft (e.g., the first shaft 409a of FIG. 16) or a second shaft (e.g., the second shaft 409b of FIG. 16).

According to an embodiment, the first shaft 409a may be connected to the motor 437 and may be rotated based on rotation of the motor 437. The first shaft 409a may also be defined as a portion of the motor 437.

According to an embodiment, the second shaft 409b may be spaced apart from the first shaft 409a and may be rotatably coupled to the bracket 420. For example, the bracket 420 may rotatably support the second shaft 409b.

Referring to FIG. 13, the figure illustrates an imaginary first line 401 drawn along an extending direction (or axial direction) of the first shaft 409a, and an imaginary second line 402 drawn along an extending direction (or axial direction) of the second shaft 409b. The first line 401 may be spaced apart from the second line 402. The distance by which the second line 402 is spaced apart from the first line 401 may be defined as a distance by which the center of an axis of the second shaft 409b is spaced apart from the center of an axis of the first shaft 409a. The distance by which the second line 402 is spaced apart from the first line 401 may be determined by the first pinion 431 and the third pinion 436. For example, a sum of the radius of the first pinion 431 and the radius of the third pinion 436 may be defined as a distance by which the center of the axis of the second shaft 409b is spaced apart from the center of the axis of the first shaft 409a. For example, when the diameter of the first pinion 431 and the diameter of the third pinion 436 are in a substantially 1:1 relationship, the diameter of the first pinion 431 (or the third pinion 436) may be substantially the same as the distance by which the second line 402 is spaced apart from the first line 401. The distance by which the second line 402 is spaced apart from the first line 401 may be defined as an amount (or a distance) of movement with respect to the center line of the motor 437.

According to an embodiment, the first pinion 431 and/or the second pinion 433 may be coupled to the first shaft 409a. For example, the first pinion 431 and/or the second pinion 433 may be disposed on the first line 401. The first pinion 431 may be spaced apart from the second pinion 433 on the first line 401.

According to an embodiment, the first pinion 431 may be configured to mesh with the third pinion 436. The third pinion 436 may be configured to mesh with the second gear teeth 414 of the second rack 413.

According to an embodiment, the third pinion 436 may be coupled to the second shaft 409b. For example, the third pinion 436 may be disposed on the second line 402.

According to an embodiment, at least a portion of the third pinion 436 may be configured to mesh with the second gear teeth 414 of the second rack 413. Another portion of the third pinion 436 may be configured to mesh with the first pinion 431.

According to an embodiment, the first pinion 431 and/or the second pinion 433 may be rotated together with the first shaft 409a as the first shaft 409a rotates.

According to an embodiment, the second rack 413 may slide on the bracket 420 based on rotation of the third pinion 436.

According to an embodiment, the third pinion 436 may be rotated in a direction opposite to a rotation direction of the first pinion 431 based on rotation of the first pinion 431.

According to an embodiment, the second rack 413 may slide on the bracket 420 based on rotation of the third pinion 436.

According to an embodiment, the first pinion 431 may be rotated in the same direction as the second pinion 433, and the third pinion 436 may be rotated in a direction opposite to the first pinion 431. The third pinion 436 may be rotated in a direction opposite to the second pinion 433. Accordingly, as the second pinion 433 coupled to the first rack 411 and the third pinion 436 coupled to the second rack 413 are rotated in directions opposite to each other, the first rack 411 and the second rack 413 may slide in directions opposite to each other.

According to an embodiment, when the motor 437 and the first shaft 409a are rotated in one direction, the second pinion 433 may be rotated in the one direction, and the third pinion 436 may be rotated in the other direction opposite to the one direction. Accordingly, the first rack 411 operatively connected to the second pinion 433 may slide in a first sliding direction, and the second rack 413 operatively connected to the third pinion 436 may slide in a second sliding direction opposite to the first sliding direction.

According to an embodiment, the first rack 411 and the second rack 413 may slide in directions opposite to each other based on rotation of the motor 437. For example, when the first rack 411 slides in a direction toward the second lens bracket (e.g., the second lens bracket 343 of FIGS. 5 to 8) (e.g., the +X direction of FIGS. 13 to 16), the second rack 413 may slide in a direction toward the first lens bracket (e.g., the first lens bracket 341 of FIGS. 5 to 8) (e.g., the -X direction of FIGS. 13 to 16). For example, when the first rack 411 slides in a direction away from the second lens bracket (e.g., the second lens bracket 343 of FIGS. 5 to 8) (e.g., the -X direction of FIGS. 13 to 16), the second rack 413 may slide in a direction away from the first lens bracket (e.g., the first lens bracket 341 of FIGS. 13 to 16) (e.g., the +X direction of FIGS. 5 to 13).

According to an embodiment, as the first rack 411 and the second rack 413 slide in directions opposite to each other, the first lens bracket (e.g., the first lens bracket 341 of FIGS. 5 to 8) and the second lens bracket (e.g., the second lens bracket 343 of FIGS. 5 to 8) may slide in directions opposite to each other.

According to an embodiment, the first lens barrel (e.g., the first lens barrel 331 of FIG. 5) and the first lens (e.g., the first lens 221 of FIG. 3) coupled thereto may slide in a direction opposite to the second lens barrel (e.g., the second lens barrel 333 of FIG. 5) and the second lens (e.g., the second lens 222 of FIG. 3) coupled thereto.

According to an embodiment, the first lens and the second lens may slide toward each other or may slide away from each other. Accordingly, the distance between the optical center of the first lens and the optical center of the second lens may be adjusted to correspond to a user's interpupillary distance (IPD).

When the first lens bracket (e.g., the first lens bracket 341 of FIGS. 5 to 8) and the second lens bracket (e.g., the second lens bracket 343 of FIGS. 5 to 8) slide in a direction in which the first lens bracket and the second lens bracket become relatively closer to each other, the first lens barrel (e.g., the first lens barrel 331 of FIG. 5) and the second lens barrel (e.g., the second lens barrel 333 of FIG. 5) may slide in a direction in which the first lens barrel and the second lens barrel become relatively closer to each other. Accordingly, the distance between the optical center of the first lens and the optical center of the second lens may be reduced. For example, sliding of the first lens bracket (e.g., the first lens bracket 341 of FIGS. 5 to 8) and the second lens bracket (e.g., the second lens bracket 343 of FIGS. 5 to 8) in a direction in which the first lens bracket and the second lens bracket become relatively closer to each other may be defined as sliding in a direction in which the distance between the optical center of the first lens and the optical center of the second lens is decreased.

When the first lens bracket (e.g., the first lens bracket 341 of FIGS. 5 to 8) and the second lens bracket (e.g., the second lens bracket 343 of FIGS. 5 to 8) slide in a direction in which the first lens bracket and the second lens bracket become relatively farther from each other, the first lens barrel (e.g., the first lens barrel 331 of FIG. 5) and the second lens barrel (e.g., the second lens barrel 333 of FIG. 5) may slide in a direction in which the fist lens barrel and the second lens barrel become relatively farther from each other. Accordingly, the distance between the optical center of the first lens and the optical center of the second lens may be increased. For example, sliding of the first lens bracket (e.g., the first lens bracket 341 of FIGS. 5 to 8) and the second lens bracket (e.g., the second lens bracket 343 of FIGS. 5 to 8) in a direction in which the first lens bracket and the second lens bracket become relatively farther from each other may be defined as sliding in a direction in which the distance between the optical center of the first lens and the optical center of the second lens is increased.

According to an embodiment, the motor 437 may receive power and signals through the connecting board 450. For example, the connecting board 450 (e.g., an FPCB) may be electrically connected to a battery (e.g., the battery 189 of FIG. 1) or to a processor (e.g., the processor 120 of FIG. 1) mounted on a circuit board (e.g., the circuit board 360 of FIG. 4).

According to an embodiment, the first pinion 431 may be configured to mesh with the third pinion 436 and may be spaced apart from the second rack 413. For example, the first pinion 431 may be indirectly and operatively connected to the second rack 413 via the third pinion 436.

According to an embodiment, the first shaft 409a may be disposed at a position spaced apart from the third surface 4131 of the second rack 413 by a first distance L1. For example, the first shaft 409a may be spaced apart from the third surface 4131 by the first distance L1 based on a direction perpendicular to, or a vertical direction with respect to the third surface 4131 of the second rack 413 (e.g., the Y-axis direction of FIG. 12). For example, the first shaft 409a may be positioned at the first distance L1 from the third surface 4131 (or from the first surface 4111).

According to an embodiment, the second shaft 409b may be disposed at a position spaced apart from the third surface 4131 of the second rack 413 by a second distance L2. For example, the second shaft 409b may be spaced apart from the third surface 4131 by the second distance L2 based on a direction perpendicular to, or a vertical direction with respect to the third surface 4131 of the second rack 413 (e.g., the Y-axis direction of FIG. 16). For example, the second shaft 409b may be positioned at the second distance L1 from the third surface 4131 (or from the first surface 4111). The second distance L2 may be smaller than the first distance L1. For example, to prevent interference between the first pinion 431 and the second rack 413, the first shaft 409a may be disposed at a position spaced apart from the third surface 4131 of the second rack 413 by the first distance L1, and the second shaft 409b may be disposed at a position spaced apart from the third surface 4131 of the second rack 413 by the second distance L2. Accordingly, a structure may be provided in which the first pinion 431 coupled to the first shaft 409a is spaced apart from the second rack 413, and the third pinion 436 coupled to the second shaft 409b meshes with the second rack 413. According to an embodiment, the third pinion 436 may have a larger diameter than the first pinion 431, and the number of gear teeth of the third pinion 436 may be greater than the number of gear teeth of the first pinion 431. In such a case, even when the first shaft 409a and the second shaft 409b are positioned at the same distance from the third surface 4131 of the second rack 413, a structure may be provided in which the first pinion 431 is spaced apart from the second rack 413, and the third pinion 436 coupled to the second shaft 409b meshes with the second rack 413.

According to an embodiment, the first surface 4111 of the first rack 411 may be disposed on substantially the same plane as the third surface 4131 of the second rack 413. For example, the first surface 4111 of the first rack 411 may form a substantially planar surface with the third surface 4131 of the second rack 413.

According to an embodiment, the second pinion 433 may be configured to mesh with the first rack 411, and the first pinion 431 may be configured to be spaced apart from the second rack 413.

According to an embodiment, since the second pinion 433 and the first pinion 431 are disposed on the first shaft 409a, the first rack 411 may have a greater thickness than the second rack 413 so as to mesh with the second pinion 433.

According to an embodiment, the first rack 411 may have a first thickness t1, which is a thickness from the first surface 4111 to the second surface 4112, and the second rack 413 may have a second thickness t2, which is a thickness from the third surface 4131 to the fourth surface 4132. According to an embodiment, the first thickness t1 may be greater than the second thickness t2. According to an embodiment, the second pinion 433 may have a larger diameter than the first pinion 431. In such a case, even when the first thickness t1 is substantially the same as the second thickness t2, or even when the first thickness t1 is smaller than the second thickness t2, a structure may be provided in which the second pinion 433 is configured to mesh with the first rack 411, and the first pinion 431 is spaced apart from the second rack 413.

According to an embodiment, the third pinion 436 may be disposed at one side of the first pinion 431. For example, the third pinion 436 may be disposed, with respect to the first pinion 431, at a side in a direction in which the distance between the optical center of the first lens and the optical center of the second lens is increased (e.g., the +X direction of FIG. 13) among the sliding directions of the second rack 413. For example, the third pinion 436 may be disposed closer to the (2-1)^{th} hole 413a than to the (2-2)^{th} hole 413b.

According to an embodiment, the first rack 411 and the second pinion 433 may be disposed relatively farther from the motor 437 than the second rack 413, the first pinion 431, and the third pinion 436.

According to an embodiment, the first surface 4111 (or the second surface 4112) of the first rack 411 and/or the third surface 4131 (or the fourth surface 4132) of the second rack 413 may face a direction in which the wearable electronic device (e.g., the wearable electronic device 201 of FIGS. 2 to 5) is oriented (e.g., the +Y direction of FIGS. 2 to 8 or FIGS. 13 to 16), and/or a direction toward a user (e.g., the -Y direction of FIGS. 2 to 8 or FIGS. 13 to 16). Accordingly, the first shaft 409a connected to the motor 437 may extend in a direction substantially perpendicular to the direction in which the wearable electronic device is oriented and the direction toward the user (e.g., the Z-axis direction of FIGS. 2 to 8 or FIGS. 13 to 16). For example, an axial direction of the first shaft 409a (e.g., the Z-axis direction of FIGS. 13 to 16) may be a direction substantially perpendicular to the direction in which the wearable electronic device is oriented and the direction toward the user. For example, the axial direction of the first shaft 409a may be substantially perpendicular to a thickness direction (e.g., the Y-axis direction of FIGS. 2 to 8 or FIGS. 13 to 16) of the first housing (e.g., the first housing 202 of FIGS. 2 to 3 or the first housing 310 of FIG. 4). In an embodiment, an axial direction of the first shaft may be a direction substantially identical to a height direction (or an up-down direction) of the first housing (e.g., the Z-axis direction of FIGS. 2 to 8 or FIGS. 13 to 16). Accordingly, as the first shaft 409a extends in the height direction of the first housing, the first shaft 409a and the motor 437 may occupy a relatively small region in the thickness direction (e.g., the Y-axis direction of FIGS. 2 to 8 or FIGS. 13 to 16) of the first housing within the first housing, compared to a case in which the axial direction of the first shaft extends or is positioned in the thickness direction (e.g., the Y-axis direction of FIGS. 2 to 8 or FIGS. 13 to 16) of the first housing. Accordingly, a thickness of the first housing in the thickness direction (e.g., a thickness in the Z-axis direction of FIGS. 2 to 12) for accommodating the first shaft 409a and the motor 437 may become relatively smaller compared to when the axial direction of the first shaft extends or is positioned in the thickness direction of the first housing (e.g., the Y-axis direction of FIGS. 2 to 8 or FIGS. 13 to 16). In addition, as the driving structure 400 including the first shaft 409a and the motor 437 is disposed on a seating portion (e.g., the seating portion 3029 of FIG. 5) formed in a connecting member (e.g., the connecting member 3027 of FIG. 5) configured to connect a first rim member (e.g., the first rim member 3022 of FIG. 5) and a second rim member (e.g., the second rim member 3024 of FIG. 5), spatial utilization of the first housing may be improved, and an overall size of the wearable electronic device (e.g., the wearable electronic device 201 of FIGS. 2 to 5) may be reduced.

The wearable electronic device may include a display module that provides a visual image to a user. In an embodiment, the display module may provide a visual image to a user through a pair of lenses corresponding to the user's left eye and right eye.

To improve the quality of a visual image of a VR environment or an AR environment provided to the user, the distance between the optical centers of the pair of lenses is required to correspond to, or be substantially identical to, an interpupillary distance (IPD) of the user.

Depending on individual characteristics or the body shape of the user, interpupillary distances of respective users may vary, and accordingly, a wearable electronic device capable of adjusting the distance between the optical centers of the pair of lenses is required.

According to an embodiment of the disclosure, a driving structure capable of adjusting the distance between the optical center of the first lens and the optical center of the second lens, and a wearable electronic device including the driving structure, may be provided.

However, the problem intended to be solved by the disclosure is not limited to the above-described problems, and may be defined in various ways without departing from the spirit and scope of the disclosure.

According to an embodiment of the disclosure, a driving structure capable of moving, through a single motor, the first lens bracket and the second lens bracket in a direction in which the distance between the optical center of the first lens and the optical center of the second lens is increased or decreased, and an electronic device including the driving structure, may be provided.

The effects that are capable of being obtained by the disclosure are not limited to those described above, and other effects not described above may be clearly understood by a person ordinarily skilled in the art to which the disclosure belongs based on the following description.

According to an embodiment of the disclosure, a wearable electronic device 201 may include a housing 310, a first lens assembly 311, a second lens assembly 313, a display module 350, a driving member 430, a first rack 411, and a second rack 413. The first lens assembly may be disposed within the housing. The second lens assembly may be disposed within the housing. The display module may be configured to output an image to a user through the first lens assembly and/or the second lens assembly. The driving member may be disposed within the housing. The first rack may be operatively connected to the driving member. The first rack may be coupled to the first lens assembly. The second rack may be operatively connected to the driving member. The second rack may be coupled to the second lens assembly. The first rack may include a first surface 4111, a second surface 4112, and first gear teeth 412. The first surface may be coupled to at least a portion of the first lens assembly. The second surface may face a direction opposite to the first surface. The first gear teeth may protrude from the second surface. The second rack may include a third surface 4131, a fourth surface 4132, and second gear teeth 414. The third surface may be coupled to at least a portion of the second lens assembly. The fourth surface may be facing a direction opposite to the third surface. The second gear teeth 414 may protrude from the fourth surface. The second surface of the first rack may face substantially the same direction as the fourth surface of the second rack. The first rack and the second rack may be configured to slide in opposite directions relative to each other based on a driving force provided from the driving member.

According to an embodiment, the driving member may include a motor 437, a first shaft 409a, a first pinion 431, a second pinion 433, and a third pinion 435 or 436. The motor may be disposed within the housing. The first shaft may be connected to the motor. The first pinion may be disposed on the first shaft. The second pinion may be disposed on the first shaft. The second pinion may be spaced apart from the first pinion. The third pinion may be operatively connected to one of the first pinion and the second pinion.

According to an embodiment, the first pinion may be operatively connected to the first rack. The second pinion may be operatively connected to the second rack through the third pinion 435.

According to an embodiment, the second pinion may be configured to rotate in the same direction as the first pinion. The third pinion may be configured to mesh with the second pinion. The third pinion may be configured to rotate in a direction opposite to the first pinion.

According to an embodiment, the first rack may be configured to slide based on a rotation of the first pinion. The second rack may be configured to slide based on a rotation of the third pinion.

According to an embodiment, the first pinion may be operatively connected to the second rack via the third pinion 436. The second pinion may be operatively connected to the first rack.

According to an embodiment, the second pinion may be configured to rotate in the same direction as the first pinion. The third pinion may be configured to mesh with the first pinion. The third pinion may be configured to rotate in a direction opposite to the first pinion.

According to an embodiment, the second rack may be configured to slide based on a rotation of the third pinion. The first rack may be configured to slide based on a rotation of the second pinion.

According to an embodiment, the first rack and the second rack may be configured to slide in opposite directions relative to each other based on a rotation of the motor.

According to an embodiment, the driving member may further include a second shaft 409. The second shaft may be spaced apart from the first shaft. The third pinion may be disposed on the second shaft. The first shaft may be spaced apart from the third surface by a first distance based on a direction perpendicular to the third surface. The second shaft may be spaced apart from the third surface by a second distance smaller than the first distance based on the perpendicular direction.

According to an embodiment, the first surface of the first rack and the third surface of the second rack may be disposed on substantially the same plane.

According to an embodiment, a first thickness t1 of the first rack may be greater than a thickness t2 of the second rack.

According to an embodiment, the driving member may be configured to provide a driving force to cause the first lens assembly and the second lens assembly to slide in a direction in which the first lens assembly and the second lens assembly become closer to or farther from each other.

According to an embodiment, the housing may include a first rim member 3022, a second rim member 3024, a connecting member 3027, and a seating portion 3029. The first rim member may accommodate at least a portion of the first lens assembly. The second rim member may accommodate at least a portion of the second lens assembly. The connecting member may connect the first rim member and the second rim member. The seating portion may be formed on the connecting member. The seating portion may accommodate at least a portion of the driving member.

According to an embodiment, the display module may include a first display module 351 and a second display module 353. The first display module may be disposed on the first lens assembly. The second display module may be disposed on the second lens assembly.

According to an embodiment of the disclosure, a wearable electronic device 201 may include a housing 310, a first lens assembly 311, a second lens assembly 313, a first display module 351, a second display module 353, and a driving structure 400. The first lens assembly may be disposed within the housing. The second lens assembly may be disposed within the housing. The first display module may be disposed on the first lens assembly. The second display module may be disposed on the second lens assembly. The driving structure may be configured to provide a driving force to cause the first lens assembly and the second lens assembly to slide in a direction in a direction in which the first lens assembly and the second lens assembly become closer to or farther from each other. The driving structure may include a bracket 420, a motor 437, a first rack 411, and a second rack 413. The motor may be at least partially accommodated in the bracket. The first rack may be operatively connected to the motor. The first rack may be coupled to at least a portion of the first lens assembly. The first rack may be configured to slide on the bracket. The second rack may be operatively connected to the motor. The second rack may be coupled to at least a portion of the second lens assembly. The second rack may be configured to slide on the bracket.

According to an embodiment, the driving structure may further include a first shaft 409a, a second shaft 409b, a first pinion 431, a second pinion 433, and a third pinion 435 or 436. The first shaft may be connected to the motor. The second shaft may be rotatably coupled to the bracket. The second shaft may be spaced apart from the first shaft. The first pinion may be disposed on the first shaft. The second pinion may be disposed on the first shaft. The second pinion may be spaced apart from the first pinion. The third pinion may be disposed on the second shaft. The third pinion may be configured to mesh with one of the first pinion and the second pinion.

According to an embodiment, the first lens assembly may include a first lens barrel 331, a first lens bracket 341, and a first lens 221. The first lens bracket may be coupled to the first lens barrel. The first lens may be disposed in the first lens barrel. The second lens assembly may include a second lens barrel 333, a second lens bracket 343, and a second lens 222. The second lens bracket 343 may be coupled to the second lens barrel. The second lens may be disposed in the second lens barrel.

According to an embodiment, the first lens bracket may include a first fixing portion 3411. The first fixing portion may extend toward the second lens bracket. The first fixing portion may be coupled to the first rack. The second lens bracket may include a second fixing portion 3431. The second fixing portion may extend toward the first lens bracket. The second fixing portion may be coupled to the second rack.

According to an embodiment, the first fixing portion may be disposed in parallel with the second fixing portion.

In the foregoing detailed description of this document, specific embodiments have been described. However, it will be evident to a person ordinarily skilled in the art that various modifications can be made without departing from the scope of the disclosure.

## Claims

1. A wearable electronic device (201) comprising:
a housing (310);
a first lens assembly (311) disposed within the housing;
a second lens assembly (313) disposed in the housing;
a display module (350) configured to output an image to a user through the first lens assembly and the second lens assembly;
a driving member (430) disposed in the housing;
a first rack (411) operatively connected to the driving member and coupled to the first lens assembly; and
a second rack (413) operatively connected to the driving member and coupled to the second lens assembly,
wherein the first rack comprises a first surface (4111) coupled to at least a portion of the first lens assembly, a second surface (4112) facing a direction opposite to the first surface and first gear teeth (4124) protruding from the second surface,
wherein the second rack comprises a third surface (4131) coupled to at least a portion of the second lens assembly, a fourth surface (4132) facing a direction opposite to the third surface and second gear teeth (414) protruding from the fourth surface,
wherein the second surface of the first rack faces substantially a same direction as the fourth surface of the second rack, and
wherein the first rack and the second rack are configured to slide in opposite directions relative to each other based on a driving force provided from the driving member.

2. The wearable electronic device of claim 1, wherein the driving member comprises:
a motor (437) disposed within the housing;
a first shaft (409a) connected to the motor;
a first pinion (431) disposed on the first shaft;
a second pinion (433) disposed on the first shaft and spaced apart from the first pinion; and
a third pinion (435, 436) operatively connected to one of the first pinion and the second pinion.

3. The wearable electronic device of any one of claims 1 and 2, wherein the first pinion is operatively connected to the first rack, and
wherein the second pinion is operatively connected to the second rack through the third pinion (435).

4. The wearable electronic device of any one of claims 1 to 3, wherein the second pinion is configured to rotate in a same direction as the first pinion, and
wherein the third pinion is engaged with the second pinion and configured to rotate in a direction opposite to the first pinion.

5. The wearable electronic device of any one of claims 1 to 4, wherein the first rack is configured to slide based on a rotation of the first pinion, and
wherein the second rack is configured to slide based on a rotation of the third pinion.

6. The wearable electronic device of any one of claims 1 and 2, wherein the first pinion is operatively connected to the second rack through the third pinion (436), and
wherein the second pinion is operatively connected to the first rack.

7. The wearable electronic device of claim 6, wherein the second pinion is configured to rotate in the same direction as the first pinion, and
wherein the third pinion is engaged with the first pinion and configured to rotate in a direction opposite to the first pinion.

8. The wearable electronic device of any one of claims 6 and 7, wherein the second rack is configured to slide based on a rotation of the third pinion, and
wherein the first rack is configured to slide based on a rotation of the second pinion.

9. The wearable electronic device of any one of claims 2 to 8, wherein the first rack and the second rack are configured to slide in opposite directions relative to each other based on a rotation of the motor.

10. The wearable electronic device of any one of claims 1 to 9, wherein the driving member further comprises a second shaft (409b) spaced apart from the first shaft,
wherein the third pinion is disposed on the second shaft,
wherein the first shaft is spaced apart from the third surface by a first distance with respect to a direction perpendicular to the third surface, and
wherein the second shaft is spaced apart from the third surface by a second distance, which is less than the first distance, with respect to the direction perpendicular to the third surface.

11. The wearable electronic device of any one of claims 1 to 10, wherein the first surface of the first rack and the third surface of the second rack are disposed on substantially a same plane.

12. The wearable electronic device of any one of claims 1 to 11, wherein a first thickness of the first rack (t1) is greater than a second thickness (t2) of the second rack.

13. The wearable electronic device of any one of claims 1 to 12, wherein the driving member is configured to provide a driving force to cause the first lens assembly and the second lens assembly to slide in a direction in which the first lens assembly and the second lens assembly become closer to or farther from each other.

14. The wearable electronic device of any one of claims 1 to 13, wherein the housing comprises:
a first rim member (3022) accommodating at least a portion of the first lens assembly;
a second rim member (3024) accommodating at least a portion of the second lens assembly;
a connecting member (3027) connecting the first rim member and the second rim member; and
a seating portion (3029) formed in the connecting member and accommodating at least a part of the driving member.

15. The wearable electronic device of any one of claims 1 to 14, wherein the display module comprises:
a first display module (351) disposed on the first lens assembly; and
a second display module (353) disposed on the second lens assembly.
